# EUROPÄISCHE PATENTSCHRIFT

(11) **EP 1 053 426 B1**
(45) Veröffentlichungstag und Bekanntmachung des Hinweises auf die Patenterteilung: **02.02.2005**
(21) Anmeldenummer: 99902449.0
(22) Anmeldetag: 04.02.1999
(51) Int. Cl.: F16K 31/02

(54) **SCHALTELEMENT, INSBESONDERE PNEUMATIKVENTIL**
CONTROL ELEMENT, ESPECIALLY A PNEUMATIC VALVE
ELEMENT DE COMMANDE D'ECOULEMENT, EN PARTICULIER VANNE PNEUMATIQUE

(30) Priorität: 06.02.1998 AT 22098
(43) Veröffentlichungstag der Anmeldung: 22.11.2000
(60) Teilanmeldung: 03029140.5
(73) Patentinhaber: Sticht, Walter, A-4800 Attnang-Puchheim (AT)
(72) Erfinder: Sticht, Walter, A-4800 Attnang-Puchheim (AT)
(74) Vertreter: Secklehner, Günter, Dr.
(86) Internationale Anmeldenummer: PCT/AT1999/000030
(87) Internationale Veröffentlichungsnummer: WO 1999/040352

(56) Entgegenhaltungen:
- EP-A- 0 250 948
- DE-A- 3 316 258
- US-A- 4 114 645
- US-A- 4 966 194
- US-A- 5 143 287

## Beschreibung

Die Erfindung betrifft ein Schaltelement für Druckmittel, wie im Oberbegriff des Anspruches 1 beschrieben ist.

Aus der US 4,114,645 A ist ein gattungsgemäßes Schaltelement, insbesondere ein Mehrwegeventil, bekannt, das einen Ventilkörper aufweist, in dem ein Verteilungskanal und mehrere in diesen mündende Zu- und Abströmkanäle ausgebildet und im Verteilungskanal zwei voneinander getrennte, in Längsrichtung desselben verschiebbare Bewegungselemente (Kolben) angeordnet sind, zu deren Betätigung an den stirnseitigen Enden des Ventilkörpers aufgeschraubte Übertragungselemente (thermoelektrische Operatoren) vorgesehen sind. Diese Übertragungselemente bestehen aus einem kapselartigen Gehäuse und einer innerhalb desselben über eine Führungsanordnung verschiebbaren unflexiblen, starren Stützplatte sowie einem, in einem zwischen der Stützplatte und dem Gehäuse eingeschlossenen Innenraum angeordneten Heizelement zur bedarfsweisen Wärmebeaufschlagung der sich innerhalb des Innenraumes befindlichen Flüssigkeit. Zum fluidischen Trennen und Verbinden von dem Zu- oder Abströmkanal und dem Verteilungskanal, wird das Bewegungselement (Kolben) über die mittels der bei Erwärmung expandierbaren Flüssigkeit verstellbare Stützplatte verschoben. Zwischen dem Ventilkörper und der Stützplatte des Übertragungselementes ist eine Feder vorgesehen, über die eine sichere Rückstellung der Stützplatte von seiner das Bewegungselement (Kolben) verschiebenden Betätigungsstellung in seine Ausgangsstellung erreicht wird.

Des weiteren ist aus der US 4,036,433 A ein Schaltelement, insbesondere ein Mehrwegeventil, bekannt, bestehend aus einem Ventilkörper mit zwei miteinander verbundenen Gehäuseteilen. Im ersten Gehäuseteil sind ein Verteilungskanal und mehrere in diesen mündende Zu- und Abströmkanäle angeordnet. Im Verteilungskanal befindet sich ein verstellbares Bewegungselement (Kolben), über das eine Strömungsverbindung zwischen zwei Zu- und Abströmkanälen unterbrochen oder hergestellt werden kann. Das Bewegungselement besitzt in einem dem zweiten Gehäuseteil zugewandten Endbereich einen Flansch, zwischen dem und einem sich am ersten Gehäuseteil im Bereich des Verteilungskanals abstützenden Ring eine Feder angeordnet ist. Der zweite Gehäuseteil bildet das Übertragungselement in Form eines thermoelektrischen Operators aus, der ein starres, kapselartiges Gehäuse und eine, innerhalb des Gehäuses angeordnete Kammer abschließende elastisch verformbare Membran aufweist. Diese Membran unterteilt den Ventilkörper in die beiden Gehäuseteile und ist zwischen den beiden Gehäuseteilen eingespannt. Die Kammer des thermoelektrischen Operators ist mit einem bei Erwärmung expandierenden Material, insbesondere Wachs, gefüllt, das auf eine dem zweiten Gehäuseteil zugewandte Seitenfläche der Membran einwirkt. Durch Anlegen von elektrischem Strom an das expandierbare Material, expandiert die Membran und wird über diese das Bewegungselement entgegen der Wirkung der Federkraft verstellt. Wird die elektrische Energie abgeschaltet, wird über die Feder das Bewegungselement und die Membran in die Ausgangsstellung verbracht.

Diesen bekannten Schaltelementen haftet der Nachteil an, daß durch die Anordnung der Übertragungselemente außerhalb des vom Druckmittel durchströmten Kanals konstruktiv bedingt die Baugröße als auch die Schaltwege zur Verstellung des Bewegungselementes zwischen einer Öffnungs- und Schließstellung angehoben werden, sowie über das kapselartige Gehäuse nur eine mäßige Wärmeabfuhr erreicht wird, sodaß diese Übertragungselemente bei hohen Schaltfrequenzen einer hohen thermischen Belastung ausgesetzt sind.

Eine Kontrolleinheit für die Regelung der Lüftung eines klimatisierten Raumes ist aus der US 5,143,287 A bekannt, die ein Schaltelement, insbesondere ein Mehrwegeventil, mit zwei Zuströmkanälen und einem Abströmkanal aufweist. In den Zuströmkanälen herrschen unterschiedliche Drücke, wobei zur Einstellung eines geregelten Druckes im Abströmkanal eine entsprechende Ansteuerung des im Mehrwegeventils angeordneten, verschiebbaren Bewegungselementes (Kolbens) über außerhalb des Ventilkörpers und dem Kanal an gegenüberliegenden Seiten angeordnete Übertragungselemente erfolgt.

Eine andere Ausgestaltung eines Schaltelementes, insbesondere eines Mehrwegeventiles, für die Regelung einer Steuereinheit einer Klimaanlage ist aus der US 4,966,194 A bekannt. Im Verteilungskanal des Ventilkörpers ist ein verschiebbares Bewegungselement angeordnet, derart, dass durch wechselweises Öffnen oder Schließen von Zu- und Abströmkanälen die Fließrichtung einer Flüssigkeit veränderbar ist. Dazu wird das Bewegungselement über ein am Ventilkörper seitlich aufgebautes, sich außerhalb des Verteilungskanales befindliches Übertragungselement verstellt.

Aus der DE 33 16 258 A1 ist ein als Übertragungselement verwendbarer elektrochemischer Druckwandler bekannt, wie er bei Heizkörperventilen eingesetzt wird, der außerhalb des Ventilkörpers angeordnet und auf diesem aufgeschraubt ist.

Schließlich sind aus dem Stand der Technik Schaltelemente für Druckmittel bekannt, welche aus einem Ventilkörper bestehen, der eine Mehrzahl von Öffnungen und Kanäle aufweist und in zumindest einem Kanal ein Bewegungselement, welches je nach Schaltstellung einen oder mehrere Kanäle freigibt oder verschließt, angeordnet ist. Dieses Bewegungselement ist linear und relativ beweglich in einem Kanal geführt und weist einen Anker auf, welcher aus dem Ventilkörper heraus in eine Antriebseinrichtung hineinragt. Dieses Mittel zur Relativbewegung des Bewegungselementes besteht aus einer Spule, die mit Strom beaufschlagt wird und mittels Magnetkraft den Anker und damit das Bewegungselement im Kanal bewegt. Nachteilig ist neben dem aus einer Vielzahl von Einzelkomponenten bestehenden Aufbau, der sich auf die Fertigung und die Montage derartiger Schaltelemente negativ auswirkt, auch der hohe Anteil an bewegter Masse, wodurch insbesondere die Schaltzeit derartiger Schaltelemente erhöht wird, was insbesondere bei automatisierten Montageanlagen zu ungünstigen bzw. unwirtschaftlichen Taktzeiten führt.

Aufgabe der Erfindung ist es daher, ein aus einer geringen Anzahl von Einzelkomponenten bestehendes Schaltelement zu schaffen, welches geringste Schaltzeiten ermöglicht und mit kleinsten Abmessungen realisiert werden kann.

Die Aufgabe der Erfindung wird durch die im Anspruch 1 beschriebenen Merkmale gelöst. Der überraschende Vorteil dabei ist, daß durch die erfindungsgemäße Anordnung des Übertragungselementes in einem der vom Druckmittel durchströmten Kanäle, die Schaltzeiten, Schaltwege und die Bewegungsenergie reduziert wird, wodurch insbesondere bei automatisierten Fertigungseinrichtungen erheblich kürzere Taktzeiten und geringere Betriebskosten realisiert werden. Ein weiterer Vorteil ist, daß keine zusätzlichen Elemente außerhalb am Schaltelement angebracht werden müssen, wodurch die Baugröße des Schaltelementes verkleinert wird. Zudem kommt, daß die bei Erwärmung expandierende Flüssigkeit von der Hülle vollständig umgrenzt ist und ein Austritt derselben aus der Hülle verhindert wird.

Günstig ist aber auch eine Ausführungsvariante nach Anspruch 2, wodurch die Möglichkeit geschaffen wird, über das Schaltelement oder die Schaltelemente Aktuatoren einzeln, d.h. getrennt anzusteuern.

Vorteilhaft ist dabei eine Weiterbildung nach Anspruch 3, bei der Betriebskosten des Schaltelementes, insbesondere Energiekosten, und die Baugröße des Schaltelementes weiter reduziert werden, sowie die Möglichkeit einer raschen Betätigung des Schaltelementes sichergestellt ist. Darüber hinaus ist von Vorteil, daß Standardelemente für den Aufbau des Schaltelementes verwendet werden können, wodurch Fertigungskosten desselben erheblich reduziert werden.

Von Vorteil ist eine Ausführungsvariante nach Anspruch 4, wodurch eine kompakte Bauform des Schaltelementes erreicht wird. Dazu kommt, daß eine Einsparung von Bauteilen des Schaltelementes erreicht wird und somit Herstellkosten des Schaltelementes reduziert werden.

Ein platzsparende, kompakte Anordnung des Mittels ist im Anspruch 5 beschrieben.

Vorteilhaft ist auch die Anordnung eines kolbenförmigen Bewegungselementes zwischen den einander gegenüberliegenden Übertragungselementen, wie im Anspruch 6 beschrieben.

Möglich ist eine Weiterbildung nach Anspruch 7, wodurch in einfacher Weise eine Reduzierung des Verschleißes und damit eine Reduzierung von Herstellkosten sowie Instandhaltungskosten erreicht wird. Ferner kann eine Medienzirkulation in der Schließstellung des kolbenförmigen Bewegungselementes zuverlässig verhindert werden.

Vorteilhaft ist eine Variante nach Anspruch 8, welche sich durch eine hohe Flexibilität hinsichtlich der einzelnen Schaltmöglichkeiten des Schaltelementes auszeichnet.

Mit der Ausgestaltung nach Anspruch 9 kann auf einfache Weise ein gesonderte Absperrung jedes einzelnen Kanals erfolgen.

Eine vorteilhafte Variante beschreibt Anspruch 10, die es erlaubt, die Positioniergenauigkeit des Schaltelementes bzw. des Bewegungselementes weiter zu erhöhen.

Möglich ist aber auch eine Weiterbildung nach Anspruch 11, wodurch eine Leitungsverbindung mit Anschlägen geschaffen wird, welche bei Energiebeaufschlagung eine elektromagnetische Kraft auf das Bewegungselement ausüben und dadurch dieses in einer vorbestimmten Position arretieren.

Die Ausführungsvariante nach Anspruch 12 hat den Vorteil, daß eine die Relativbewegung des Bewegungselementes nicht behinderte Verlegung von Leitungsverbindungen erreicht wird.

Bei einer Ausführung nach Anspruch 13 wird in einfacher Weise eine Leitungsverbindung zum Mittel hergestellt.

Durch die im Anspruch 14 angeführten Merkmale wird in vorteilhafter Weise die Montage des Schaltelementes erleichtert.

Die Weiterbildungen gemäß den Ansprüchen 15 und 16 stellen vorteilhafte Maßnahmen dar, durch die die Baugröße des Schaltelementes weiter minimiert werden kann.

Eine günstige Variante ist in Anspruch 17 beschrieben, durch welche eine unbeabsichtigte Relativbewegung des kolbenförmigen Bewegungselementes verhindert wird.

Von Vorteil ist eine Weiterbildung nach Anspruch 18, wodurch im gelösten Zustand der Halte- und/oder Arretiervorrichtung eine freie Beweglichkeit des kolbenförmigen Bewegungselementes gewährleistet ist.

Von Vorteil ist eine Variante nach Anspruch 19, wodurch in einfacher Weise eine unbeabsichtigte Axialbewegung des kolbenförmigen Bewegungselementes verhindert wird.

Vorteilhaft ist dabei eine Ausführung nach Anspruch 20, wodurch eine federnde Rückstellbarkeit der Halte- und/oder Arretiervorrichtung erreicht wird.

Eine andere günstige Variante wird durch Anspruch 21 erreicht, wodurch mittels Strom die Rückstellung der Halte- und/oder Arretiervorrichtung möglich ist.

Günstige Ausführungen sind in den Ansprüchen 22 und 23 beschrieben, wodurch das Durchströmvolumen durch das Schaltelement in einfacher Weise variiert werden kann.

Möglich ist aber auch eine Variante nach Anspruch 24, wodurch jedem Heizelement ein entsprechendes Übertragungselement zugeordnet werden kann und dadurch eine leichte Montage des Schaltelementes erreicht wird.

Von Vorteil ist eine Ausbildung nach Anspruch 25, wodurch eine Leitungsverbindung in einfacher Weise hergestellt werden kann und dadurch eine Montage bzw. Demontage des Schaltelementes weiter erleichtert wird.

Vorteilhaft ist dabei eine Weiterbildung nach Anspruch 26, wodurch die Herstellung des Schaltelementes weiter erleichtert wird.

Durch die Variante nach Anspruch 27 wird in einfacher Weise die Dichtheit und Zentrierung des Bewegungselementes gewährleistet.

Durch die Ausbildung nach Anspruch 29 ist eine wünschenswerte elastische Verformung der Halte- und/oder Arretiervorrichtung gegeben, wodurch die Arretierung bzw. eine Aufhebung der Arretierung leicht möglich wird.

Schließlich sind auch die Weiterbildungen nach den Ansprüchen 28 und 30 von Vorteil, durch welche eine automatische Rückstellbarkeit des Bewegungselementes bei Volumensänderung der Hülle erreicht wird.

Die Erfindung wird nachfolgend anhand der in den Zeichnungen gezeigten Ausführungsbeispiele näher beschrieben.

Es zeigen:
- Fig. 1: ein erfindungsgemäßes Schaltelement, geschnitten, in der Stirnansicht;
- Fig. 2: eine andere Ausführungsvariante eines erfindungsgemäßen Schaltelementes, geschnitten, in der Stirnansicht;
- Fig. 3: das Schaltelement, geschnitten, gemäß den Linien III - III in Fig. 2;
- Fig. 4: ein Bewegungselement des erfindungsgemäßen Schaltelementes in der Stirnansicht;
- Fig. 5: eine weitere Ausführungsvariante eines erfindungsgemäßen Schaltelementes, geschnitten, in der Stirnansicht;
- Fig. 6: das erfindungsgemäße Schaltelement, geschnitten gemäß den Linien VI - VI in Fig. 5;
- Fig. 7: eine weitere Ausführungsvariante des erfindungsgemäßen Schaltelementes, geschnitten, in der Stirnansicht;
- Fig. 8: das Schaltelement, geschnitten gemäß den Linien VIII - VIII in Fig. 7;
- Fig. 9: eine andere Ausführungsvariante des erfindungsgemäßen Schaltelementes, geschnitten, in der Stirnansicht;
- Fig. 10: das Schaltelement, geschnitten, gemäß den Linien X - X in Fig. 9;
- Fig. 11: das Schaltelement, geschnitten, gemäß den Linien XI - XI in Fig. 10;
- Fig. 12: ein Mittel zur Relativbewegung in der Draufsicht;
- Fig. 13: das Mittel, geschnitten, gemäß den Linien XIII - XIII in Fig. 12;
- Fig. 14: ein Mittel und ein Bewegungselement, geschnitten, in der Stirnansicht;
- Fig. 15: eine andere Ausführungsvariante des erfindungsgemäßen Schaltelementes, geschnitten, in der Stirnansicht;
- Fig. 16: das erfindungsgemäße Schaltelement, geschnitten gemäß den Linien XVI - XVI in Fig. 15;
- Fig. 17: ein Verschlußstück des erfindungsgemäßen Schaltelementes, geschnitten, in der Seitenansicht;
- Fig. 18: das Verschlußstück, geschnitten, gemäß den Linien XVIII - XVIII in Fig. 17;
- Fig. 19: eine weitere Ausführungsvariante des erfindungsgemäßen Schaltelementes, geschnitten, in der Stirnansicht;
- Fig. 20: das Schaltelement, geschnitten gemäß den Linien XX - XX in Fig. 19;
- Fig. 21: eine andere Ausführungsvariante des erfindungsgemäßen Schaltelementes, geschnitten, in der Stirnansicht;
- Fig. 22: eine weitere Ausführungsvariante des erfindungsgemäßen Schaltelementes, geschnitten, in der Stirnansicht;
- Fig. 23: eine Halte- und/oder Arretiervorrichtung des Schaltelementes, geschnitten, in der Stirnansicht;
- Fig. 24: eine andere Ausführungsform der Halte- und/oder Arretiervorrichtung, geschnitten, in der Stirnansicht;
- Fig. 25: eine andere Ausführungsvariante der Halte- und/oder Arretiervorrichtung, geschnitten, in der Stirnansicht;
- Fig. 26: die Halte- und/oder Arretiervorrichtung, geschnitten, gemäß den Linien XXVI - XXVI in Fig. 25;
- Fig. 27: die Halte- und/oder Arretiervorrichtung, geschnitten, gemäß den Linien XXVII - XXVII in Fig. 25;
- Fig. 28: eine andere Ausführungsform des erfindungsgemäßen Schaltelementes, geschnitten, in der Seitenansicht;
- Fig. 29: das Schaltelement, geschnitten, gemäß den Linien XXIX - XXIX in Fig. 28;
- Fig. 30: das Schaltelement, geschnitten, gemäß den Linien XXX - XXX in Fig. 28;
- Fig. 31: eine schematische Darstellung einer Steuereinrichtung mit einem medienbetätigten Verbraucher.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können.

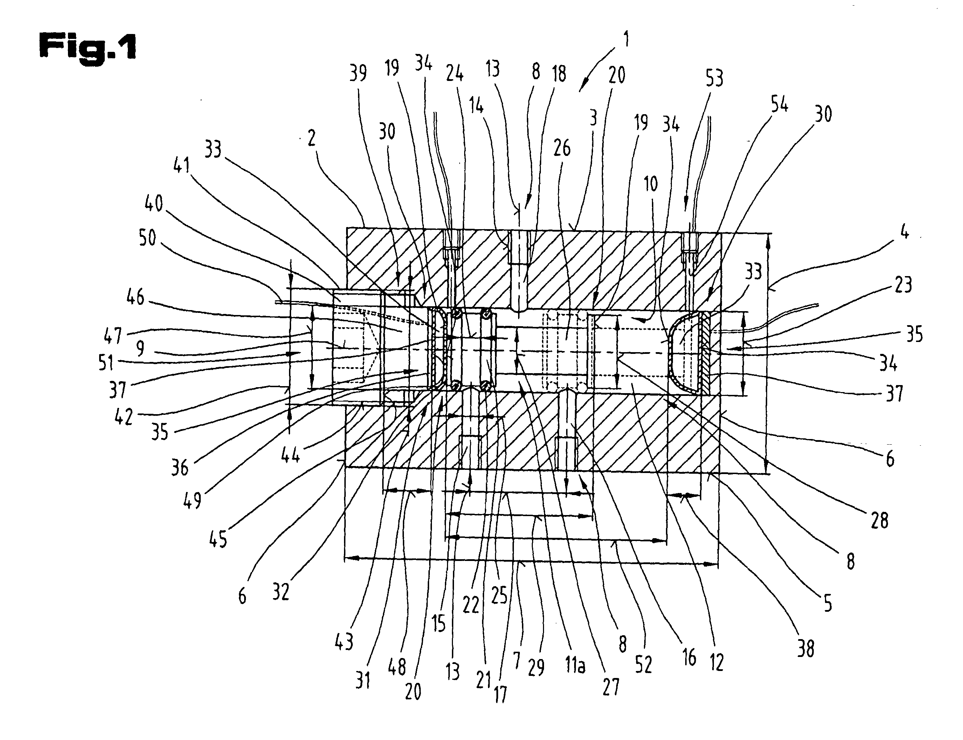

In der Fig. 1 ist ein Schaltelement 1 für Druckmittel, insbesondere ein Pneumatikventil 2 gezeigt. Dieses ist beispielsweise aus Metall oder Kunststoff aufgebaut und quaderförmig ausgebildet. Es besitzt eine vorzugsweise ebenflächig ausgebildete Oberseite 3, eine parallel zu dieser um eine Höhe 4 beabstandet verlaufende Unterseite 5, sowie rechtwinkelig zu diesen verlaufende Seitenflächen 6, wobei die zwei einander gegenüberliegende und abgewandte Seitenflächen 6 um eine rechtwinkelig zur Höhe 4 gemessene Länge 7 voneinander beabstandet sind. Das Schaltelement 1 besitzt vorzugsweise mehrere Kanäle 8.

Zumindest ein Kanal 8 ist mit einer parallel zur Oberseite 3 und/oder Unterseite 5 verlaufenden Mittelachse 9 als Führungsvorrichtung 10 für zumindest ein kolbenförmiges Bewegungselement 11a ausgebildet. Dieser die Führungsvorrichtung 10 ausbildende Kanal 8 ist dabei als Verteilungskanal 12 für das Druckmittel ausgebildet. Beispielsweise rechtwinkelig zur Oberseite 3 und/oder Unterseite 5 verlaufen Bohrungsachsen 13 in den Zentren von den zylindrischen Kanälen 8. Der von der Oberseite 3 bis zum Verteilungskanal 12 reichende Kanal 8 ist beispielsweise über ein Anschlußgewinde 14 und über nicht dargestellte Schlauchverbindungen mit einem nicht dargestellten Zylinder, insbesondere Pneumatikzylinder verbunden. Von der Unterseite 5 ragen beispielsweise zwei Kanäle 8 bis zum Verteilungskanal 12, wobei ein Kanal 8 als Zuströmkanal 15 und ein weiterer Kanal 8 als Abströmkanal 16 ausgebildet ist. Diese Kanäle 8 sind voneinander um einen Abstand 17 distanziert, welcher von der Bohrungsachse 13 eines von der Oberseite 3 bis zum Verteilungskanal 12 reichenden, einen Kanal 8 bildenden Sekundärkanals 18 beispielsweise halbiert wird.

Das Bewegungselement 11a wird in paralleler Richtung zur Mittelachse 9 durch rechtwinkelig zu dieser verlaufende Stirnflächen 19 begrenzt, welche das Bewegungselement 11a, insbesondere Bünde 20 begrenzen. Zumindest ein Bund 20 besitzt eine oder mehrere konzentrisch um die Mittelachse 9 umlaufende, nutförmige Vertiefungen 21, welche zur Aufnahme von Dichtelementen 22 ausgebildet sind. Ein konzentrisch um die Mittelachse 9 umlaufendes, beispielsweise als Dichtschichte, Dichtring ausgebildetes Dichtelement 22 wird dabei von einem konzentrisch um die Mittelachse 9 umlaufenden, den Verteilungskanal 12 begrenzenden Innendurchmesser 23 begrenzt. Bei Verwendung von zwei Dichtelementen 22 sind diese in Richtung der Mittelachse 9 um einen Abstand 24 distanziert, welcher beispielsweise gleich groß ist wie ein konzentrisch zu der Bohrungsachse 13 verlaufender Kanaldurchmesser 25 eines Kanals 8.

Soll nun über den Sekundärkanal 18, welcher beispielsweise mit einem nicht dargestellten Pneumatikzylinder verbunden ist, das im Pneumatikzylinder befindliche Druckmittel, insbesondere die Druckluft aus diesem entfernt werden, so befindet sich der die Dichtelemente 22 aufweisende Bund 20 in der dargestellten Schließstellung, bei welcher die Verbindung zwischen dem Zuströmkanal 15 und dem Verteilungskanal 12 und/oder dem Sekundärkanal 18 durch die Dichtelemente 22 versperrt ist. Gleichzeitig wird in dieser Stellung des Bewegungselementes 11a eine Verbindung zwischen Sekundärkanal 18 und Abströmkanal 16 hergestellt.

Zur Reduzierung von Strömungswiderständen sind die beiden Bünde 20 über ein Zwischenstück 26 verbunden, welches einen konzentrisch um die Mittelachse 9 umlaufenden Durchmesser 27 besitzt, der geringer ist als ein parallel zu diesem gemessener Bunddurchmesser 28. Durch das Zwischenstück 26 werden die Bünde 20 so weit distanziert, daß die Stirnflächen 19 um einen parallel zur Mittelachse 9 gemessenen Abstand 29 distanziert sind. In der den Zuströmkanal 15 absperrenden Schließstellung des Bewegungselementes 11 a befindet sich eine Stirnfläche 19 vorzugsweise in einer anliegenden Stellung mit einem benachbart zum Zuströmkanal 15 angeordneten Übertragungselement 31 zur Relativbewegung zwischen dem Bewegungselement 11a und dem Ventilkörper.

Dieses Übertragungselement 31 ist im Ventilkörper angeordnet und besitzt eine elastisch verformbare Hülle 32, die einen Innenraum 33 vollständig umgrenzt. Die Hülle 32 besitzt dem Innenraum 33 abgewandte Außenflächen 34, wobei eine Außenfläche 34 in der dargestellten Schließstellung des Bewegungselementes 11 a in einer anliegenden Position zur Stirnfläche 19 eines Bundes 20 ist. An einer weiteren Außenfläche 34 oder im Innenraum 33 angeordnet, befindet sich ein Mittel 30, das als Heizvorrichtung 35 in Form von einem oder mehreren Heizelementen 36, insbesondere Heizwiderständen 37, ausgebildet ist. Über diese Heizvorrichtung 35 wird elektrisch erzeugte Heizenergie auf das Übertragungselement 31, insbesondere auf eine im Innenraum 33 angeordnete, schnell verdampfende Flüssigkeit übertragen, welche bei geringer Temperaturveränderung den Aggregatzustand, vorzugsweise von flüssig in gasförmig ändert und dadurch der Innenraum 33 eine Volumszunahme erfährt.

Dieser Zustand ist im vorliegenden Ausführungsbeispiel bei einem ebenfalls im Verteilungskanal 12 angeordneten, benachbart zum Abströmkanal 16 befindlichen Übertragungselement 31 gezeigt. Bei diesem Übertragungselement 31 ist ersichtlich, daß die in etwa rechtwinkelig zur Mittelachse 9 und in etwa parallel zueinander verlaufenden Außenflächen 34 der Hülle 32 um eine parallel zur Mittelachse 9 gemessene Distanz 38 beabstandet sind, welche größer ist als die Distanz 38 von Außenflächen 34 einer Hülle 32, deren im Innenraum 33 befindliche, schnell verdampfende Flüssigkeit keine Aggregatzustandsänderung durch Wärmeenergieeinwirkung erfahren hat. Auch dieses weitere Übertragungselement 31 weist ein Mittel 30, vorzugsweise eine durch Heizwiderstände 37 gebildete Heizvorrichtung 35 auf, welche die im Innenraum 33 befindliche schnell verdampfende Flüssigkeit erwärmt und eine Aggregatzustandsänderung herbeiführt.

Diese Aggregatzustandsänderung verläuft bei schnell verdampfenden Flüssigkeiten dermaßen, daß im Augenblick der Aggregatzustandsänderung, d.h. bei Volumszunahme des Innenraums 33 eine Abkühlung erfolgt und dadurch die Aggregatzustandsänderung von flüssig in gasförmig reversiert wird, wodurch die Distanz 38 wiederum reduziert wird und der Innenraum 33 sein ursprüngliches Volumen einnimmt. Durch die kurzfristige Volumsänderung wird auf die Stimfläche 19 des Bewegungselementes 11a ein Impuls ausgeübt, wodurch dieses im Verteilungskanal 12, welcher die Führungsvorrichtung 10 für das Bewegungselement 11a bildet, verschoben wird. Das jeweils gegenüberliegende, nicht beaufschlagte Übertragungselement 31 bildet dabei dann eine Dämpfungsvorrichtung für das Bewegungselement 11a aus.

Der Verteilungskanal 12 ist beispielsweise als Sackloch ausgebildet und besitzt in einem der Seitenfläche 6 benachbarten Bereich eine Aufnahme 39 für ein Verschlußstück 40. Dieses besitzt beispielsweise einen Gewindeabschnitt 41, der einen konzentrisch um die Mittelachse 9 verlaufenden Außendurchmesser 42 besitzt, welcher größer ist als der Innendurchmesser 23 des Verteilungskanals 12 und in etwa einem Kemdurchmesser 43 eines Innengewindes 44 der Aufnahme 39 entspricht. Eine dem Verteilungskanal 12 zugewandte, rechtwinkelig zur Mittelachse 9 verlaufende, den Gewindeabschnitt 41 begrenzende Fläche 45 des Verschlußstückes 40 wird von einem vorzugsweise zylindrisch ausgebildeten Fortsatz 46 in Richtung zum Verteilungskanal 12 überragt, welcher einen konzentrisch um die Mittelachse 9 verlaufenden Fortsatzdurchmesser 47 und eine rechtwinkelig zu diesem gemessene Fortsatzlänge 48 aufweist, die eine rechtwinkelig zur Mittelachse 9 verlaufende Frontfläche 49 von der Fläche 45 distanziert. An dieser Frontfläche 49 befindet sich nun das bereits beschriebene Heizelement 36, welches über eine Leitung 50 mit elektrischem Strom versorgt wird, die im Fortsatz 46 und im Bereich des Gewindeabschnittes 41 nach außen verläuft.

Der Gewindeabschnitt 41 besitzt weiters beispielsweise eine in strichlierten Linien dargestellte Innensechskantaufnahme 51. Dadurch ist es möglich, das Verschlußstück 40 mit dessen Fortsatz 46 mehr oder weniger in die Führungsvorrichtung 10, d.h. in den Verteilungskanal 12 einzuführen und damit einen Abstand 52 der einander zugewandten Außenflächen 34 zweier Übertragungselemente 31 zu verändern. Damit ist es wiederum möglich, die Schließstellung bzw. Öffnungsstellung des Bewegungselementes 11 a exakt auf die Kanäle 8 abzustimmen und so eine falsche Medienverteilung auf die verschiedenen Kanäle 8 zu unterbinden. Das Schaltelement 1 kann weiters, wie beispielhaft dargestellt, Überwachungselemente 53 aufweisen, welche beispielsweise als induktive Näherungsschalter 54 ausgebildet sind und die Stellung des Bewegungselementes 11a überwachen.

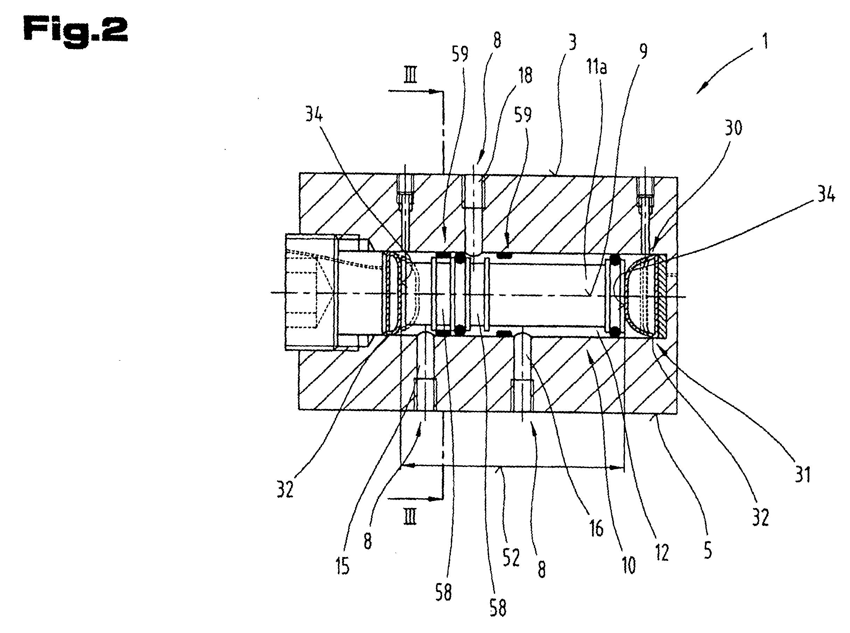

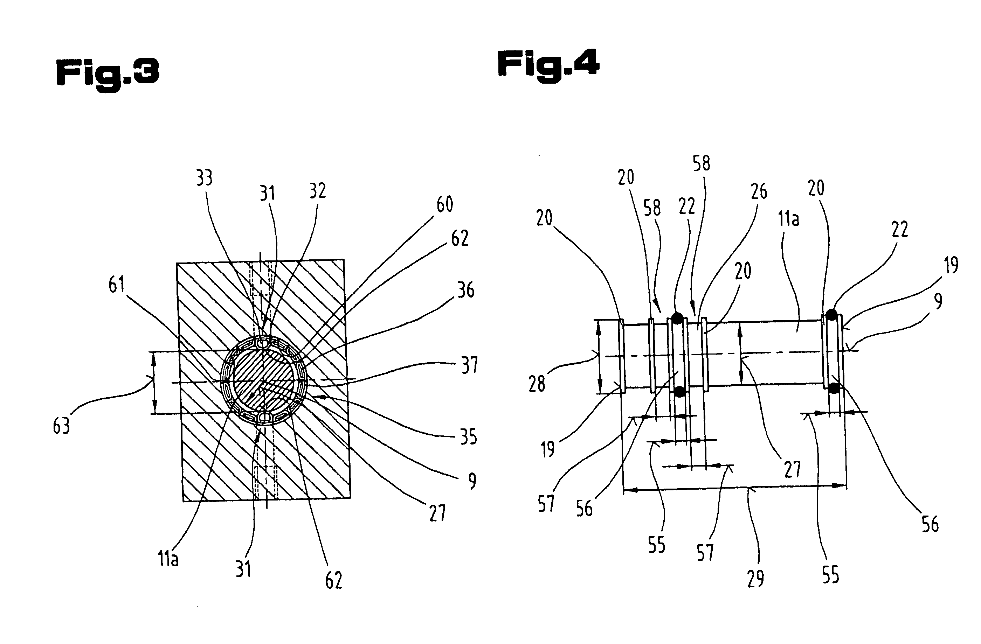

In den gemeinsam beschriebenen Fig. 2 bis 4 ist eine andere Ausführungsvariante eines erfindungsgemäßen Schaltelementes 1 gezeigt. Das Schaltelement 1 besitzt in dem als Führungsvorrichtung 10 ausgebildeten Verteilungskanal 12 das Bewegungselement 11a. Das Bewegungselement 11a, welches detaillierter in Fig. 4 dargestellt ist, besitzt zwei einander abgewandte und dieses in Richtung der Mittelachse 9 begrenzende Stirnflächen 19, welche voneinander um den Abstand 29 distanziert sind.

Das Bewegungselement 11a weist mehrere in Richtung des Abstandes 29 voneinander distanzierte Bünde 20 auf. Jeweils zwei Bünde 20 sind voneinander um eine Distanz 55 beabstandet, welche parallel zum Abstand 29 gemessen wird. Die Bünde 20 weisen einen konzentrisch um die Mittelachse 9 gemessenen Bunddurchmesser 28 auf Durch die um die Distanz 55 voneinander beabstandeten Bünde 20 wird eine Aufnahmenut 56 für die Dichtelemente 22 gebildet. Von den Bünden 20 einer Aufnahmenut 56 um einen Abstand 57 distanziert, befinden sich weitere Bünde 20, welche Haltenuten 58 für eine in Fig. 3 detaillierter dargestellte Halte- und/oder Arretiervorrichtung ausbilden. In den um den Abstand 29 voneinander distanzierten Endbereichen des Bewegungselementes 11a befinden sich ebenfalls Bünde 20, wobei diese auch eine Aufnahmenut 56 für ein Dichtelement 22 ausbilden können. Die Außenflächen 34 der Hüllen 32 von den Übertragungselementen 31 sind voneinander um den Abstand 52 distanziert, welcher im vorliegenden Ausführungsbeispiel dem Abstand 29 entspricht. Den Übertragungselementen 31 ist jeweils ein Mittel 30, insbesondere eine Heizvorrichtung 35, zugeordnet.

Das Schaltelement 1 besitzt wiederum mehrere Kanäle 8, wobei ein von der Oberseite 3 zum Verteilungskanal 12 ragender Kanal 8 als Sekundärkanal 18 ausgebildet ist, während ein von der Unterseite 5 zum Verteilungskanal 12 ragender Kanal 8 als Zuströmkanal 15 und ein weiterer als Abströmkanal 16 ausgebildet ist. Im Verteilungskanal 12 befindet sich sowohl im Zwischenbereich zwischen Zuströmkanal 15 und Sekundärkanal 18, als auch zwischen Abströmkanal 16 und Sekundärkanal 18, die bereits erwähnte Halte- und/oder Arretiervorrichtung 59.

Diese ist detailliert in Fig. 3 dargestellt und weist eine konzentrisch um die Mittelachse 9 verlaufende Heizvorrichtung 35 auf, welche aus mehreren an einer dem Verteilungskanal 12 in Richtung zur Mittelachse 9 begrenzenden Innenfläche 60 angeordneten Heizelementen 36 aufgebaut ist, welche in Umfangsrichtung der Innenfläche 60 nacheinander angeordnet sind und beispielsweise durch Heizwiderstände 37 gebildet sind. An einer die Heizelemente 36 in Richtung zur Mittelachse 9 begrenzenden Innenseite 61 angeordnet, befinden sich Übertragungselemente 31, wobei vorzugsweise jedem Heizelement 36 ein Übertragungselement 31 zugeordnet ist. Diese Übertragungselemente 31 besitzen Hüllen 32, welche Innenräume 33 umgrenzen, in denen eine leicht verdampfende Flüssigkeit angeordnet ist.

Wird nun ein Übertragungselement 31 mittels dem Heizelement 36 mit Wärmeenergie beaufschlagt, so verdampft die im Innenraum 33 angeordnete Flüssigkeit und die Hülle 32 expandiert, wobei dieser Vorgang beispielsweise gleichzeitig bei zwei diametral gegenüberliegenden Übertragungselementen 31 vonstatten geht. Im expandierten Zustand sind einander zugewandte Flächen 62 der einander diametral gegenüberliegenden Übertragungselemente 31 um einen Abstand 63 voneinander distanziert, der größer ist als der Durchmesser 27 von Zwischenstücken 26 des in Fig. 4 dargestellten Bewegungselementes 11a, welche Bünde 20 voneinander distanzieren. Der Abstand 63 ist jedoch geringer als der Bunddurchmesser 28, sodaß beispielsweise zwei diametral gegenüberliegende in Fig. 3 dargestellte Übertragungselemente 31 in die Haltenut 58 eingreifen und so eine Axialbewegung des in Fig. 4 dargestellten kolbenförmigen Bewegungselementes 11a in Richtung der Mittelachse 9 verhindern. Durch diese sternförmig ablaufende Ansteuerung der Heizelemente 36 wird eine Reduzierung des Energiebedarfes der Halte- und/oder Arretiervorrichtung 59 erreicht.

Da die Expansion der Hülle 32 nur für einen kurzen Augenblick vonstatten geht, werden die über den Innenumfang der Innenseite 61 der Heizvorrichtung 35 angeordneten Übertragungselemente 31, d.h. die diesen zugeordneten Heizelemente 36 in einer aufeinanderfolgenden Weise angesteuert, sodaß beispielsweise jeweils nur zwei diametral gegenüberliegende Hüllen 32 kurzfristig expandieren. Durch die aufeinanderfolgende Ansteuerung ergibt sich jedoch, daß immer zwei gegenüberliegende Hüllen 32 expandiert sind und so immer eine Arretierung des in Fig. 4 dargestellten, kolbenförmigen Bewegungselementes 11a gegeben ist, ohne daß bei den in Fig. 3 dargestellten Übertragungselementen 31 bzw. deren Hüllen 32 die Gefahr einer thermischen Zerstörung eintritt. Die Halte- und/oder Arretiervorrichtungen 59 sind im Verteilungskanal 12 so voneinander distanziert angeordnet, daß bei einer eine Strömungsverbindung zwischen Zuströmkanal 15 und Sekundärkanal 18 verhindernden Stellung des kolbenförmigen Bewegungselementes 11a eine Halte- und/oder Arretiervorrichtung 59 in eine Haltenut 58 eingreift, wohingegen bei einer eine Strömungsverbindung zwischen Abströmkanal 16 und Sekundärkanal 18 verhindernden Sperrstellung des kolbenförmigen Bewegungselementes 11a eine andere Halte- und/oder Arretiervorrichtung 59 in einer weiteren Haltenut 58 des kolbenförmigen Bewegungselementes 11a eingreift.

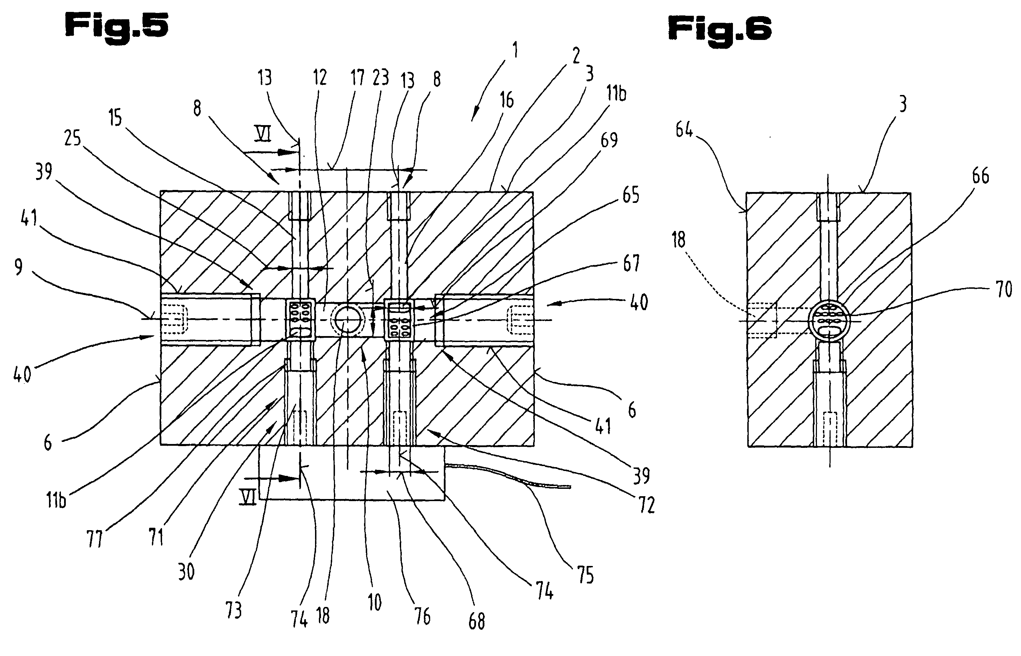

In den gemeinsam beschriebenen Fig. 5 und 6 ist eine weitere Ausführungsvariante eines Schaltelementes 1 für Druckmittel, insbesondere eines Pneumatikventiles 2 dargestellt. Dieses weist den Verteilungskanal 12 auf, welcher die Mittelachse 9 besitzt und der durch den konzentrisch um die Mittelachse 9 umlaufenden Innendurchmesser 23 begrenzt wird.

Das Schaltelement 1 besitzt mehrere Kanäle 8, wobei ein Kanal 8 als Zuströmkanal 15 und ein parallel zu diesem verlaufender Kanal 8 als Abströmkanal 16 ausgebildet ist. Diese weisen die Bohrungsachsen 13 auf, die parallel zueinander und rechtwinkelig zur Mittelachse 9 um den parallel zu dieser gemessenen Abstand 17 distanziert verlaufen. Sie erstrecken sich weiters von der Oberseite 3 bis zum Verteilungskanal 12 und besitzen im Bereich der Oberseite 3 das Anschlußgewinde 14. In etwa im Mittel des Abstandes 17 rechtwinkelig zur Mittelachse 9 und zu den Bohrungsachsen 13 verläuft der Sekundärkanal 18 von einer rechtwinkelig zur Oberseite 3 verlaufenden Rückseite 64 ebenfalls bis zum Verteilungskanal 12. Im Verteilungskanal 12 befinden sich beispielsweise zwei Bewegungselemente 11b, wobei je ein Bewegungselement 11b dem Zuströmkanal 15 und dem Abströmkanal 16 zugeordnet ist. Die Bewegungselemente 11b sind im vorliegenden Ausführungsbeispiel in Form von Flüssigkeitstropfen ausgebildet, welche in einem käfigförmigen Gehäuse 65 zwangsgeführt sind.

Das Gehäuse 65 besteht aus einem konzentrisch um die Mittelachse 9 verlaufenden Mantel 66 und rechtwinkelig zur Mittelachse 9 verlaufenden, vorzugsweise plattenförmig ausgebildeten Stirnteilen 67, welche um eine parallel zur Mittelachse 9 gemessene Weite 68 voneinander distanziert sind. Diese ist gleich oder größer dem Kanaldurchmesser 25 des Zuströmkanals 15 und/oder Abströmkanals 16 und bildet in etwa eine Breite 69 des tropfenförmigen Bewegungselementes 11b aus. Das Gehäuse 65, insbesondere der Mantel 66 und die Stirnteile 67 besitzen Öffnungen 70 zum Durchströmen des Druckmittels. Dem Zuströmkanal 15 und/oder Abströmkanal 16 gegenüberliegend angeordnet befinden sich die Mittel 30 zur Relativbewegung und/oder Verformung des Bewegungselementes 11b, welche im vorliegenden Ausführungsbeispiel als Wellenenergiequellen 71 und/oder Wellengeneratoren 72, insbesondere als Mikrowellengeneratoren 73 ausgebildet sind.

Diese besitzen parallel zueinander verlaufende Achsen 74, welche vorzugsweise fluchtend mit den Bohrungsachsen 13 des Zuströmkanals 15 und Abströmkanals 16 angeordnet sind. Soll nun beispielsweise der Abströmkanal 16 versperrt werden, d.h. ein Strömungsdurchgang vom Zuströmkanal 15 zum Sekundärkanal 18 geschaffen werden, so wird ein Mikrowellengenerator 73 beispielsweise über eine zentrale Verbindungsleitung 75 und einem Stecker 76 beaufschlagt. Durch die Wellenenergie wird das Bewegungselement 11b abgehoben und in Richtung des Abströmkanals 16 bewegt, wodurch dieser verschlossen wird. Selbstverständlich ist es aber auch möglich, anstelle des Bewegungselementes 11b ein Übertragungselement 31, wie in Fig. 1 beschrieben, einzusetzen, welches eine Volumsänderung durch Beaufschlagung mit Mikrowellenenergie erfährt und dadurch einen oder mehrere Kanäle 8 verschließt.

Die Wellenenergiequellen 71 sind in einer Gewindebohrung 77 eingeschraubt. Der Verteilungskanal 12 ist im vorliegenden Ausführungsbeispiel als Durchgangsöffnung ausgebildet, wobei im Bereich der Seitenflächen 6 die Aufnahmen 39 für Verschlußstücke 40 angeordnet sind. Diese besitzen wiederum Gewindeabschnitte 41, über die die Verschlußstücke 40 in den Aufnahmen 39 eingeschraubt sind. Diese Ausführungsvariante hat den Vorteil, daß gleichzeitig sowohl der Zuströmkanal 15 als auch der Abströmkanal 16 verschlossen werden kann.

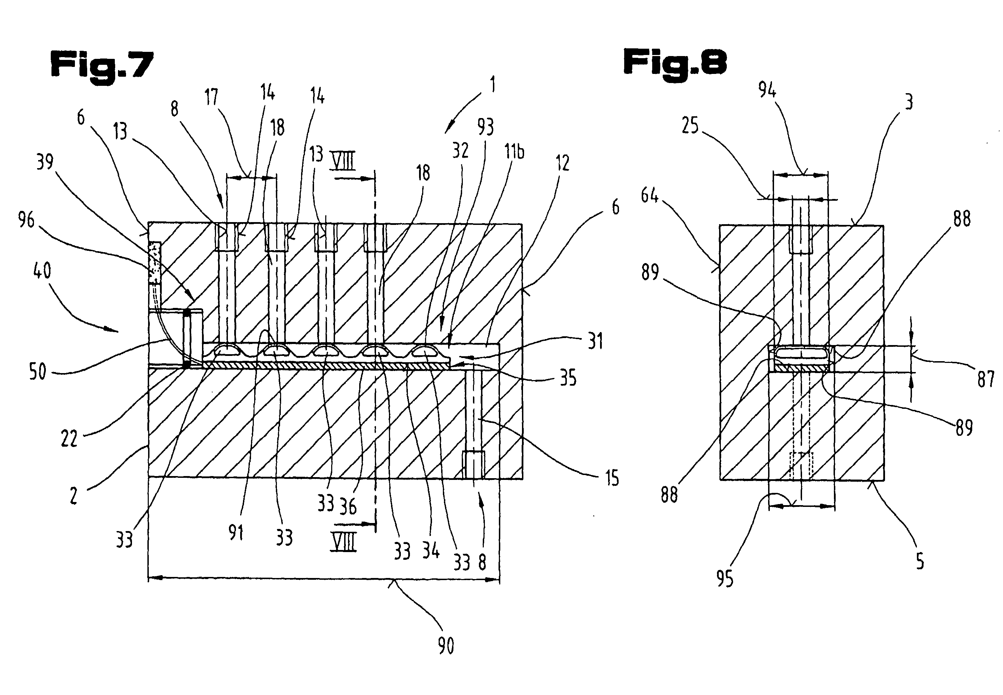

In den gemeinsam beschriebenen Fig. 7 und 8 ist eine weitere Ausführungsvariante des erfindungsgemäßen Schaltelementes 1 gezeigt. Dieses besitzt den Verteilungskanal 12, welcher durch parallel zur Oberseite 3 und Unterseite 5 verlaufende, um eine Kanalhöhe 87 voneinander distanzierte Oberflächen 88 und parallel zur Rückseite 64 verlaufende, einander zugewandte Seitenflächen 89 umgrenzt wird. Dadurch wird ein in etwa rechteckiger Querschnitt des Verteilungskanals 12 gebildet, welcher von der Seitenfläche 6 in Richtung der dieser abgewandten und parallel zu dieser verlaufenden weiteren Seitenfläche 6 eine Länge 90 besitzt. Das Pneumatikventil 2 besitzt wiederum mehrere Kanäle 8, wobei ein von der Unterseite 5 zum Verteilungskanal 12 reichender parallel zur Seitenfläche 6 verlaufender Kanal 8 als Zuströmkanal 15 ausgebildet ist und die weiteren Kanäle 8, die von der Oberseite 3 bis zum Verteilungskanal 12 reichen, als Sekundärkanäle 18 ausgebildet sind. Das Schaltelement 1 weist dabei im vorliegenden Ausführungsbeispiel vier Sekundärkanäle 18 auf, welche alle über ein Anschlußgewinde 14 verfügen. Sie verlaufen ebenfalls parallel zu den Seitenflächen 6, wobei die Bohrungsachsen 13 der Sekundärkanäle 18 um den Abstand 17 distanziert sind.

Im Verteilungskanal 12 angeordnet befindet sich das Bewegungselement 11b, welches eine Mehrzahl von in Richtung der Länge 90 beabstandete, von zumindest einer Hülle 32 umgebende Innenräume 33 aufweist, welche wiederum mit leicht verdampfenden Flüssigkeiten gefüllt sind. Die Sekundärkanäle 18 bilden im Schnittbereich mit dem Verteilungskanal 12 Öffnungen 91 aus, wobei jeder Öffnung 91 ein Innenraum 33 zugeordnet ist. Dabei wird das Bewegungselement 11b durch das Übertragungselement 31 gebildet.

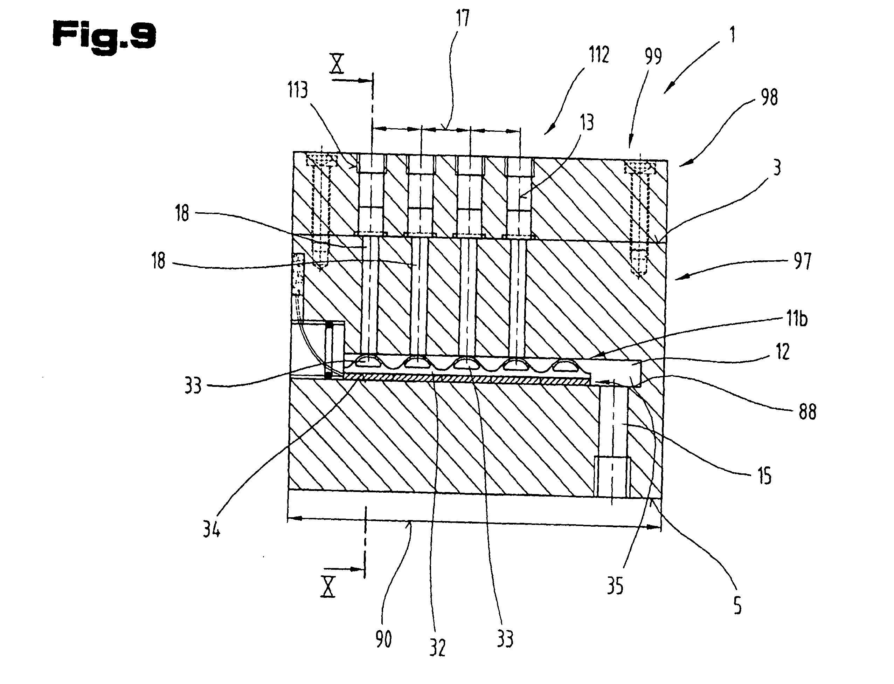

Im Bereich zwischen der Oberfläche 88 und der dieser zugewandten Außenfläche 34 des Bewegungselementes 11b ist die Heizvorrichtung 35 angeordnet, wobei jedem Innenraum 33 ein Heizelement 36 zugeordnet ist. Vorzugsweise weist das Bewegungselement 11b jedoch mehr Innenräume 33 auf, als Sekundärkanäle 18 vorhanden sind, sodaß im Bereich zwischen dem Zuströmkanal 15 und dem diesem benachbart angeordneten Sekundärkanal 18 ebenfalls ein Innenraum 33 angeordnet ist und somit ein Hauptabsperrorgan 93 geschaffen ist. Das Bewegungselement 11, d.h. die Hülle 32 besitzt, wie in Fig. 9 ersichtlich, im verformten Zustand eine parallel zur Oberseite 3 gemessene Breite 94, welche größer ist als der Kanaldurchmesser 25 des Sekundärkanals 18 und kleiner ist als eine die Seitenflächen 89 distanzierende Weite 95. Dadurch wird zwischen der Hülle 32 und der Seitenfläche 89 ein Zwischenraum geschaffen, der vom Druckmittel auch im expandierten Zustand durchströmt werden kann, sodaß eine gesonderte Absperrung jedes einzelnen Sekundärkanals 18 möglich wird. Die Breite 94 des Hauptabsperrorgans 93 kann jedoch so ausgebildet sein, daß sie im expandierten Zustand der Weite 95 entspricht und so der letztgenannte Zwischenraum im Bereich des Hauptabsperrorgans 93 vermieden wird.

Im Bereich der Stirnfläche 6 weist das Schaltelement 1 wiederum die Aufnahme 39 für das Verschlußstück 40 auf, welches beispielsweise mit der Heizvorrichtung 35 einstückig verbunden ist. Dieses Verschlußstück 40 besitzt weiters zumindest ein Dichtelement 22 und eine Leitung 50, welche über beispielsweise einen Busstecker 96 mit weiteren Leitungen oder einer Zentralverbindungsleitung verbunden werden kann.

In den weiters beschriebenen Fig. 9 bis 11 ist eine andere Ausfuhrungsvariante des erfindungsgemäßen Schaltelementes 1 dargestellt. Dieses besteht aus einem Grundkörper 97 und einem Zusatzkörper 98, welcher an der Oberseite 3 des Grundkörpers 97 angeordnet ist und ein Sammelelement 99 für das Druckmittel bildet. Der Grundkörper 97 besitzt den Verteilungskanal 12 sowie einen vom Verteilungskanal 12 bis zur Unterseite 5 ragenden Zuströmkanal 15. Von der Oberseite 3 erstrecken sich mehrere um den Abstand 17 voneinander distanzierte Sekundärkanäle 18, deren Bohrungsachsen 13 rechtwinkelig zur Oberseite 3 verlaufen. Im Verteilungskanal 12 befindet sich das Bewegungselement 11b, welches wiederum eine Mehrzahl von in Richtung der Länge 90 des Grundkörpers 97 beabstandete Innenräume 33 aufweist, die von zumindest einer Hülle 32 umgrenzt werden. Die Innenräume 33 sind mit einer leicht verdampfenden Flüssigkeit gefüllt. Im Bereich zwischen der Unterseite 5 zugeordneten Oberfläche 88 des Verteilungskanals 12 und der dieser zugewandten Außenfläche 34 des Bewegungselementes 11b bzw. der Hülle 32 ist die Heizvorrichtung 35 angeordnet.

Der Grundkörper 97 besitzt eine rechtwinkelig zur Länge 90 gemessene Breite 100, welche größer ist als eine parallel zu dieser gemessene Weite 95 des Verteilungskanals 12. Die Weite 95 ist so ausgebildet, daß der Grundkörper 97 auch in Richtung der Breite 100 mehrere, beispielsweise ebenfalls um den Abstand 17 voneinander distanzierte Sekundärkanäle 18 besitzt. Diese reichen von der Oberseite 3 bis zu der dieser zugeordneten Oberfläche 88 des Verteilungskanals 12 und bilden im Bereich dieser Oberfläche 88 Öffnungen 91 aus. Jeder Öffnung 91 ist ein Innenraum 33 des Bewegungselementes 11b zugeordnet und jedem Innenraum 33 ein Heizelement 36 der Heizvorrichtung 35.

Die Sekundärkanäle 18 des Grundkörpers 97 sind daher rasterförmig angeordnet, wobei beispielsweise jeweils fünf Sekundärkanäle 18, d.h. insbesondere deren Bohrungsachsen 13 in einer parallel zur Seitenfläche 6 verlaufenden Querebene 101 liegen und die Querebenen 101 voneinander um beispielsweise einen Abstand 17 voneinander distanziert sind. Beispielsweise jeweils vier der Sekundärkanäle 18, d.h. deren Bohrungsachsen 13 liegen in einer rechtwinkelig zur Querebene 101 verlaufenden Längsebene 102, welche parallel zur Rückseite 64 des Grundkörpers 97 verlaufen und die voneinander beispielsweise ebenfalls um den Abstand 17 distanziert sind. Dadurch ergibt sich nun eine rasterförmige Anordnung der Sekundärkanäle 18.

Das Bewegungselement 11b, welches sowohl in Richtung der Länge 90 als auch in Richtung der Weite 95 mehrere Innenräume 33 besitzt, weist die Breite 94 auf, welche im vorliegenden Ausführungsbeispiel der Weite 95 entspricht. Im Schnittbereich der Sekundärkanäle 18 mit der Oberseite 3 werden Öffnungen 103 ausgebildet, wobei die Öffnungen 103 von beispielsweise in einer Querebene 101 liegenden Sekundärkanäle 18 in eine nutförmige Vertiefung 104 münden.

Diese weist eine der Oberseite 3 zugewandte Innenfläche 105 auf, welche von der Oberseite 3 in entgegengesetzter Richtung zur Unterseite 5 um eine Nuttiefe 106 beabstandet ist. Die Vertiefung 104 wird durch zwei rechtwinkelig zur Innenfläche 105 und parallel zur Seitenfläche 6 verlaufende in den Innenseitenflächen 107 begrenzt, welche voneinander um eine rechtwinkelig zur Seitenfläche 6 gemessene Nutbreite 108 distanziert sind. Diese ist zumindest gleich groß wie der Kanaldurchmesser 25 der Sekundärkanäle 18. Die Vertiefungen 104 werden in einer parallel zur Oberseite 3 verlaufenden Ebene von zumindest einem Dichtelement 109 umgrenzt. Von der Innenfläche 105 bis zu einer von dieser um eine Höhe 110 in entgegengesetzter Richtung zur Oberseite 3 distanzierten Außenseite 111 erstreckt sich eine Anschlußöffnung 112 mit einem von der Außenseite 111 in Richtung zur Innenfläche 105 ragenden Anschlußgewinde 113. Im vorliegenden Ausführungsbeispiel ist der Zusatzkörper 98, d.h. das Sammelelement 99 so ausgebildet, daß jeweils fünf Sekundärkanäle 18 in eine Vertiefung 104 münden, welche eine Anschlußöffnung 112 aufweist. Selbstverständlich ist es jedoch auch möglich, die Vertiefung 104 nicht parallel zur Seitenfläche 6 verlaufend auszugestalten, sondern im rechten Winkel zu dieser, sodaß beispielsweise jeweils vier in einer Längsebene 102 liegende Sekundärkanäle 18 in eine Vertiefung 104 und damit in eine Anschlußöffnung 112 münden.

Durch diese Ausführungsvariante ist es nun möglich, durch Verschließen einer oder mehrerer Sekundärkanäle 18 mit dem Bewegungselement 11b eine Durchtrittsmenge des Druckmittels genau einem bestimmten Bedarf anzupassen und beispielsweise einer Mehrzahl von Kanälen 8 zu einem Strömungsweg zusammenzufassen.

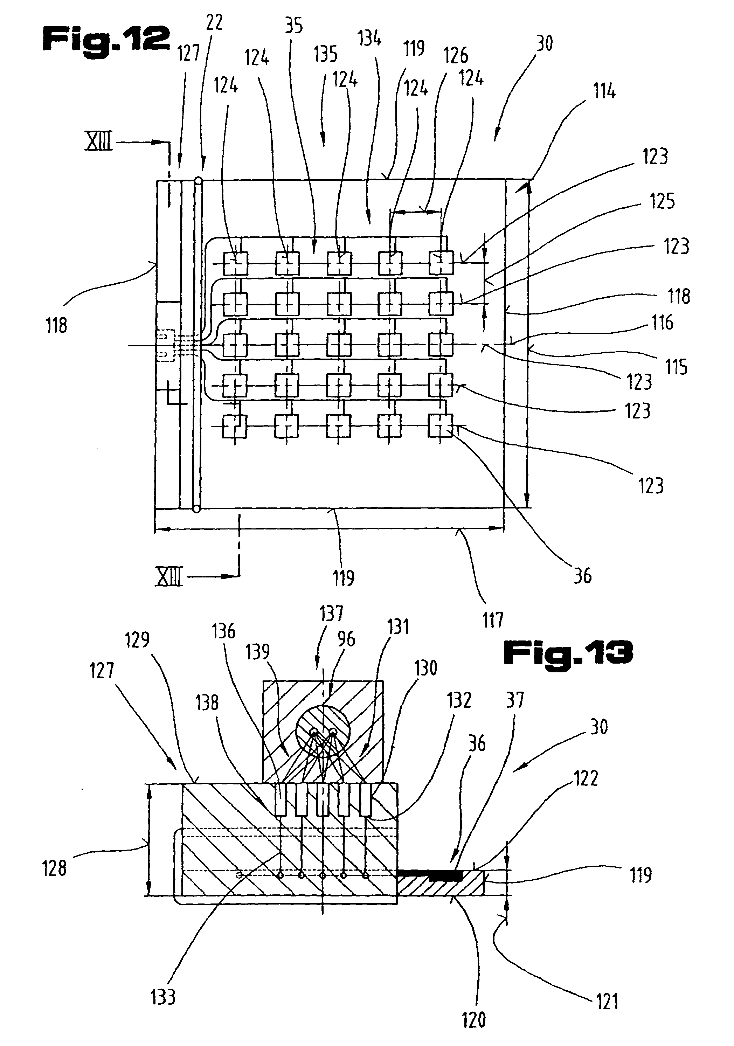

In den gemeinsam beschriebenen Fig. 12 und 13 ist nun ein Mittel 30 zur Relativbewegung und/oder Verformung eines oder mehrerer nicht dargestellter Bewegungselemente 11a, b gezeigt. Das Mittel 30, welches eine Heizvorrichtung 35 ausbildet, besteht dabei aus einer beispielsweise rechteckig ausgebildeten Grundplatte 114, welche eine Breite 115 besitzt, die von einer rechtwinkelig zu dieser verlaufenden Längsebene 116 halbiert wird. Parallel zur Längsebene 116 besitzt die Grundplatte 114 eine Länge 117. Diese distanziert zwei parallel zur Breite 115 verlaufende Querseitenflächen 118, welche rechtwinkelig zu Längsseitenflächen 119 verlaufen, die durch die Breite 115 voneinander distanziert werden und parallel zur Längsebene 116 angeordnet sind. Die Grundplatte 114 wird weiters durch eine rechtwinkelig zur Längsseitenfläche 119 verlaufende Unterseite 120 und eine von dieser um eine Höhe 121 distanzierte und parallel zu dieser verlaufende Oberseite 122 begrenzt.

An der Oberseite 122 rasterförmig angeordnet befindet sich eine Mehrzahl von Heizelementen 36, welche beispielsweise als Heizwiderstände 37 ausgebildet sind und in ihrer Gesamtheit die Heizvorrichtung 35 ausbilden. Die Heizelemente 36 sind dabei so angeordnet, daß beispielsweise je fünf Heizelemente 36 eine parallel zur Längsebene 116 verlaufende Längsebene 123 und beispielsweise je fünf Heizelemente 36 eine rechtwinkelig zu dieser und zur Längsebene 116 verlaufende Querebene 124 besitzen. Die Längsebenen 123 sind jeweils um einen parallel zur Breite 115 gemessenen Abstand 125 und die Querebenen 124 durch einen rechtwinkelig zum Abstand 125 gemessenen Abstand 126 distanziert. Die Abstände 125, 126 können dabei so ausgebildet sein, daß sie dem in Fig. 9 dargestellten Abstand 17 der Sekundärkanäle 18 entsprechen.

Die Grundplatte 114 besitzt ein Stimelement 127, welches eine parallel zur Höhe 121 gemessene Stirnhöhe 128 besitzt, die größer ist als die Höhe 121. Sie distanziert eine parallel zur Oberseite 122 verlaufende Stirnfläche 129 von der Unterseite 120. In der Stirnfläche 129 befinden sich von der Stirnfläche 129 in Richtung zur Unterseite 120 ragende Kupplungsaufnahmen 130 einer Kupplungsvorrichtung 131, welche beispielsweise als Steckbuchsen 132 ausgebildet sind, von denen Leitungen 133 in Richtung zur Unterseite 120 und anschließend zu den Heizelementen 36 führen. Die Leitungen 133 können dabei vorzugsweise im Bereich der Oberseite 122 als Leiterbahnen 134 ausgebildet sein, sodaß das Mittel 30 als integrierter Schaltkreis bzw. als Platine 135 ausgebildet sein kann.

Den Kupplungsaufnahmen 130 zugeordnet sind Kupplungsfortsätze 136, welche in einem auf der Stimfläche 129 angeordneten Kupplungselement 137 angeordnet sind. Dieses Kupplungselement 137 besitzt beispielsweise den Busstecker 96, welcher mit den Kupplungsfortsätzen 136, die beispielsweise als Steckelemente 138 ausgebildet sind, in Leitungsverbindung über Leitungen 139 stehen. Dadurch ist es nun möglich über eine Busleitung und dem Busstecker 96 sowie weiters über die Leitungen 139 die Kupplungsvorrichtung 131 und die Leitungen 133 bzw. Leiterbahnen 134 einzelne oder mehrere der Heizelemente 36 anzusteuern.

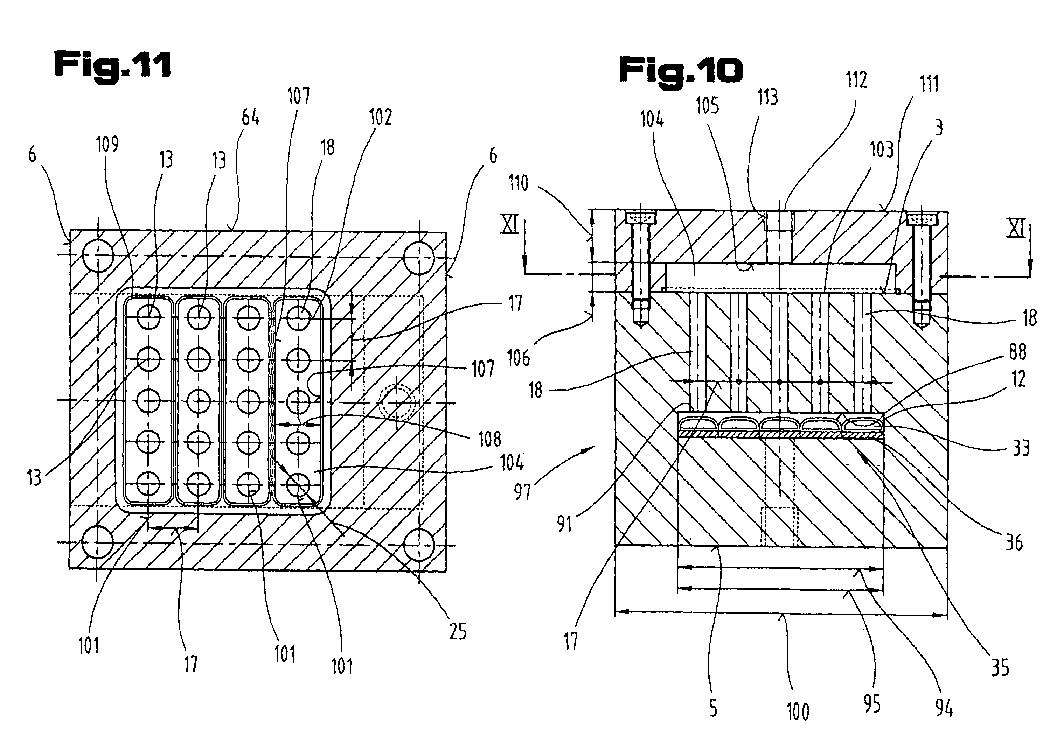

Das Mittel 30 besitzt weiters ein Dichtelement 22. Die Heizelemente 36 sind auf der Oberseite 122 so angeordnet, daß sie den einzelnen in Fig. 9 und 10 dargestellten Innenräumen 33 eines Bewegungselementes 11b zugeordnet sind.

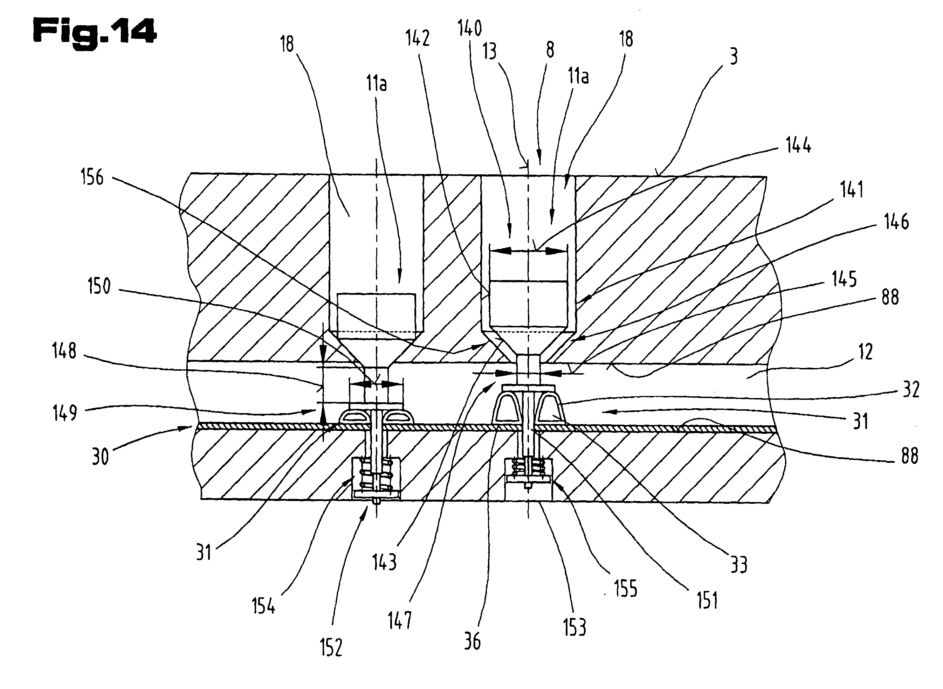

In der Fig. 14 ist eine weitere Variante eines Bewegungselementes 11a für ein Schaltelement 1 dargestellt. Dieses ist beispielsweise als Hubkolben 140 ausgebildet, welcher in einem Kanal 8, insbesondere im Sekundärkanal 18 angeordnet ist. Der Hubkolben 140 besitzt einen Dichtabschnitt 141, welcher gebildet wird durch einen von einem zylindrisch um die Bohrungsachse 13 angeordneten Zylindermantel 142 sich in Richtung zum Verteilungskanal 12 erstreckenden Kegelmantel 143, wobei der Zylindermantel 142 einen Manteldurchmesser 144 aufweist, der größer ist als ein Durchmesser 145 einer im Anschluß an einen durch den Kegelmantel 143 umgrenzten Konusteil 146 in Richtung des Verteilungskanals 12 sich erstreckenden Stange 147. Die Stange 147 weist in einem Abstand 148 vom Konusteil 146 in entgegengesetzter Richtung zum Zylindermantel 142 einen Bund 149 auf, welcher einen Bunddurchmesser 150 besitzt, der größer ist als der Durchmesser 145 der Stange 147. Im Anschluß an den Bund 149 erstreckt sich eine in entgegengesetzter Richtung zum Dichtabschnitt 141 verlaufende Zugstange 151, welche in einem vom Dichtabschnitt 141 abgewandten Endbereich einen Gewindeabschnitt 152 besitzt.

Die Zugstange 151 wird von einem Übertragungselement 31 umgrenzt, welches - wie bereits beschrieben - durch eine Hülle 32 gebildet wird, die einen Innenraum 33 umgrenzt, in dem wiederum eine hochsiedende Flüssigkeit angeordnet ist. Im Bereich zwischen der Hülle 32 und der Oberfläche 88 des Verteilungskanals 12 befindet sich das Mittel 30, beispielsweise in Form zumindest eines Heizelementes 36. Die Zugstange 151 durchragt dabei das Heizelement 36 sowie die Oberfläche 88 und ragt in eine Öffnung 153, in der ein Federelement 154 angeordnet ist. Am Gewindeabschnitt 152 ist ein Tellerelement 155 aufgeschraubt. Der Sekundärkanal 18 besitzt im Bereich der, der Oberseite 3 zugeordneten Oberfläche 88 einen konisch in Richtung zum Verteilungskanal 12 verjüngend verlaufenden Dichtsitz 156, dem der Kegelmantel 143 des Hubkolbens 140 zugeordnet ist.

Ist nun die Hülle 32 nicht mit Wärmeenergie beaufschlagt, so bewirkt das Federelement 154 eine Federkraft auf das mit der Zugstange 151 lösbar oder unlösbar verbundenes Tellerelement 155 und damit ein Anpressen des Kegelmantels 143 des Hubkolbens 140 an den Dichtsitz 156, wodurch der Strömungsdurchgang vom Verteilungskanal 12 in den Sekundärkanal 18 unterbrochen ist. Soll nun dieser Strömungsdurchgang geöffnet werden, so wird die Hülle 32 über das Heizelement 36 mit Wärmeenergie beaufschlagt, wodurch die im Innenraum 33 angeordnete hochsiedende Flüssigkeit verdampft und die Hülle 32 expandiert. Dadurch wird eine entgegengesetzt der Federkraft gerichtete Druckkraft auf den Bund 149 ausgeübt und der Hubkolben 140, d.h. der Kegelmantel 143, aus dem Dichtsitz 156 abgehoben und das Federelement 154 gespannt, wodurch bei Beendigung der Wärmeenergieeinwirkung und bei Aggregatzustandsänderung der im Innenraum 33 angeordneten Flüssigkeit von einem gasförmigen in den flüssigen Zustand der Hubkolben 140 selbsttätig in die Schließposition durch Federkraft gedrückt wird.

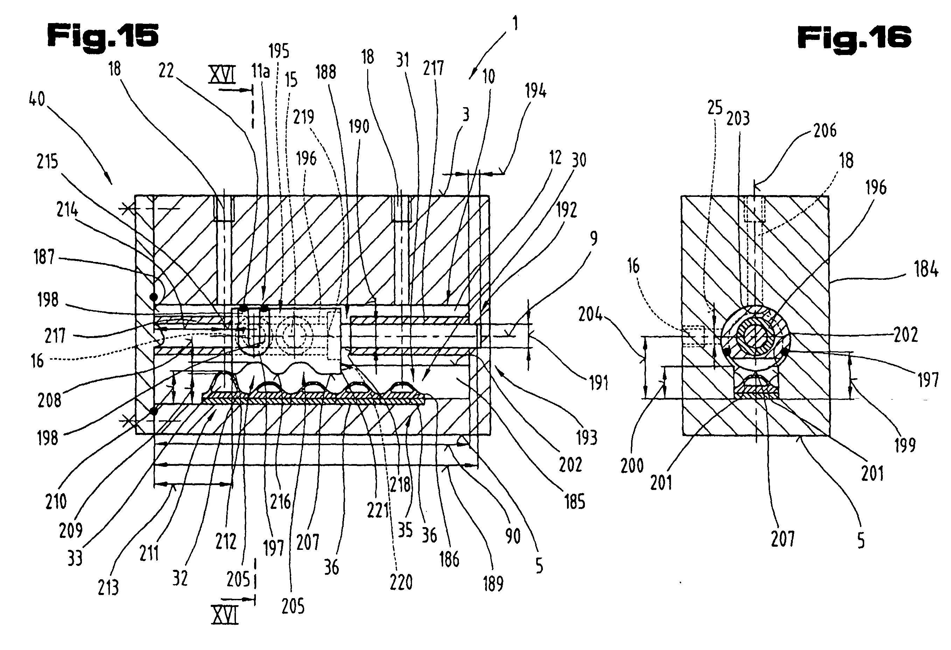

In den gemeinsam beschriebenen Fig. 15 und 16 ist eine andere Ausführungsvariante eines erfindungsgemäßen Schaltelementes 1, insbesondere eines Hydraulikventiles 184 dargestellt. Dieses besitzt zwei von der Oberseite 3 zum Verteilungskanal 12 reichende Sekundärkanäle 18, sowie zwei rechtwinkelig zu diesen verlaufende Kanäle 8, wovon einer als Zuströmkanal 15 und ein weiterer als Abströmkanal 16 ausgebildet ist. Der Verteilungskanal 12 ist als zylindrische Bohrung ausgebildet, welche in einem der Unterseite 5 benachbarten Bereich eine Nut 185 mit einem parallel zur Unterseite 5 verlaufenden Nutgrund 186 aufweist, in welcher das Übertragungselement 31 und/oder das Mittel 30 angeordnet ist. Der Verteilungskanal 12 wird durch ein plattenförmiges Verschlußstück 40 verschlossen, welches an einer dem Verteilungskanal 12 zugewandten Innenfläche 187 einen diese rechtwinkelig überragenden zylinderförmigen Bolzen 188 aufweist.

Dieser besitzt eine parallel zur Mittelachse 9 und rechtwinkelig zur Innenfläche 187 gemessene Bolzenlänge 189, welche vorzugsweise größer ist als die parallel zu dieser gemessene Länge 90 des Verteilungskanals 12. Der Bolzen 188 besitzt einen rechtwinkelig zur Bolzenlänge 189 gemessenen Bolzendurchmesser 190, welcher gleich oder kleiner ist einem Ausnehmungsdurchmesser 191 einer Ausnehmung 192, welche in einem entgegengesetzt zum Verschlußstück 40 angeordneten Endbereich 193 des Schaltelementes 1 angeordnet ist. Eine parallel zur Bolzenlänge 189 gemessene Tiefe 194 der Ausnehmung 192 ist dabei so gewählt, daß diese addiert mit der Länge 90 größer ist als die Bolzenlänge 189. Der Bolzen 188 bildet die Führungsvorrichtung 10 für das kolbenförmige Bewegungselement 11a aus, welches im Verteilungskanal 12 angeordnet ist. Dabei kann zwischen Bolzen 188 und Bewegungselement 11a eine Längsführung vorgesehen werden, welche eine radiale Bewegung des Bewegungselementes 11a verhindert.

Das Bewegungselement 11a weist ein oder mehrere konzentrisch um die Mittelachse 9 umlaufende Lagerelemente 195, insbesondere in Form von Gleitlagerbuchsen 196 auf, in die der Bolzen 188 eingeführt ist. Das Bewegungselement 11a besitzt zumindest ein Dichtelement 22, welches vorzugsweise einstückig ausgebildet ist und zwei Querstege 197 sowie zwei in etwa rechtwinkelig zu diesen verlaufende Umfangsstege 198 aufweist. Die Querstege 197 verlaufen parallel zur Mittelachse 9 und sind vom Nutgrund 186 in entgegengesetzter Richtung zur Unterseite 5 um eine Höhe 199 beabstandet, welche größer ist als eine parallel zu dieser gemessene Breite 200 von einander zugewandten parallel zueinander und rechtwinkelig zum Nutgrund 186 verlaufenden Nutseite 201. Die Breite 200 wird dabei begrenzt durch den Nutgrund 186 und einer Schnittkante 202, welche gebildet wird durch die Nutseiten 201 und einer zylindrischen, konzentrisch um die Mittelachse 9 umlaufende Oberfläche 203 des Verteilungskanals 12. Die Höhe 199 ist jedoch geringer als ein parallel zu dieser gemessener Achsabstand 204, welcher die Bohrungsachse 13 des Zuströmkanals 15 und/oder des Abströmkanals 16 vom Nutgrund 186 beabstandet. Der Achsabstand 204 entspricht dabei zumindest der Höhe 199 zuzüglich des halben Kanaldurchmessers 25 des Zuströmkanals 15 und/oder des Abströmkanals 16.

Das Bewegungselement 11a besitzt in einem dem Nutgrund 186 zugewandten Bereich rechtwinkelig zur Mittelachse 9 verlaufende konkave Einformungen 205, welche eine das Bewegungselement 11a in Richtung zum Nutgrund 186 begrenzende, in einer durch die Mittelachse 9 verlaufenden, rechtwinkelig zur Innenfläche 187 und zur Oberseite 3 befindlichen Symmetrieebene 206 liegende Oberflächenlinie 207 in Richtung der Mittelachse 9 um eine Einformungstiefe 208 überragen. Die Oberflächenlinie 207 ist vom Nutgrund 186 um einen Abstand 209 distanziert, welcher geringer ist als eine Höhe 210 eines Segmentes 211 der Hülle 32 des Übertragungselementes 31, dessen Innenraum 33 im expandierten Zustand ist. Eine dem Verschlußelement 40 benachbarte Endkante 212 des Bewegungselementes 11a ist von der Innenfläche 187 um einen Abstand 213 distanziert, welcher in einer den Abströmkanal 16 verschließenden Endstellung des Bewegungselementes 11a größer ist als ein Abstand 214 eines der Mittelachse 9 am nächsten liegenden Oberflächenbereiches eines expandierten Segmentes 211 von der Innenfläche 187. Die Endkante 212 ist dabei von dem der Mittelachse 9 am nächsten liegenden Oberflächenbereich des Segmentes 211 um einen parallel zur Mittelachse 9 gemessenen Seitenversatz 215 beabstandet.

Soll nun das Bewegungselement 11a in entgegengesetzter Richtung zum Verschlußstück 40 bewegt werden, so wird das dem Verschlußstück 40 benachbarte Segment 211 des Übertragungselementes 31 expandiert, wodurch die Hülle 32 auf die benachbarte Endkante 212 drückt und dadurch eine parallel zur Mittelachse 9 verlaufende Axialkraftkomponente auf das Bewegungselement 11a ausübt. Dadurch erreicht eine weitere, die erste Einformung 205 entgegengesetzt zur Endkante 212 begrenzende Endkante 216 eine Position, bei der diese ebenfalls den Seitenversatz 215 zum der Mittelachse 9 am nächsten liegenden Oberflächenbereich des weiteren Segmentes 211 des Übertragungselementes 31 besitzt. Wird nun dieses weitere Segment 211 expandiert, so wird eine weiterführende Axialbewegung des Bewegungselementes 11a entsprechend der beschriebenen Vorgangsweise durchgeführt.

Die Axialbewegung des Bewegungselementes 11a wird durch einen hülsenförmigen Anschlag 217 begrenzt, welcher konzentrisch um den Bolzen 188 verlaufend angeordnet ist. Dieser Anschlag 217 besitzt eine dem Bewegungselement 11a zugewandte ringförmige Anschlagfläche 218, welche parallel zu einer Stirnfläche 219 einer Ausnehmung 220 des Bewegungselementes 11a verläuft. In einer den Zuströmkanal 15 mittels der Dichtelemente 22 abdichtenden Stellung des Bewegungselementes 11a befinden sich die Anschlagfläche 218 und die Stirnfläche 219 in einer anliegenden Stellung.

Soll nun das Bewegungselement 11a in Richtung zum Verschlußstück 40, d.h. in eine den Abströmkanal 16 abdichtende Stellung bewegt werden, so wird auf eine das Bewegungselement 11a in entgegengesetzter Richtung zum Verschlußstück 40 begrenzende Endkante 221 eine Axialkraftkomponente ausgeübt, welche durch ein dieser Endkante 221 zugeordnetes expandiertes Segment 211 entsteht. Zur Axialbewegung ist es weiters erforderlich, daß die Segmente 211 nicht gleichzeitig expandiert werden, sondern jeweils in aufeinanderfolgender Reihenfolge, sodaß bei Expansion eines Segmentes 211 die diesem benachbarten Segmente 211 und vorzugssweise alle weiteren in entspanntem Zustand sind. Die Expansion der Segmente 211, welche in den Innenräumen 33 wiederum eine schnell verdampfende Flüssigkeit aufweisen, erfolgt durch thermische Beaufschlagung der Segmente 211 mittels der bereits beschriebenen, aus den einzelnen Heizelementen 36 bestehenden Heizvorrichtung 35, wobei jedem Segment 211 ein Heizelement 36 zugeordnet ist, welches unabhängig von den anderen Heizelementen 36 mit elektrischem Strom versorgt werden kann. Zum Zwecke der Begrenzung der Axialbewegung in Richtung zum Verschlußstück 40 ist konzentrisch um den Bolzen 188 ebenfalls ein Anschlag 217 angeordnet. Somit wird auf das Bewegungselement 11a durch Erhitzen der Flüssigkeit im Innenraum 33 eine Kraft ausgeübt, wobei diese Kraft durch mehrere in Vorschubrichtung des Bewegungselementes 11a aufeinanderfolgend, erzeugte Druckimpulse erzeugt wird.

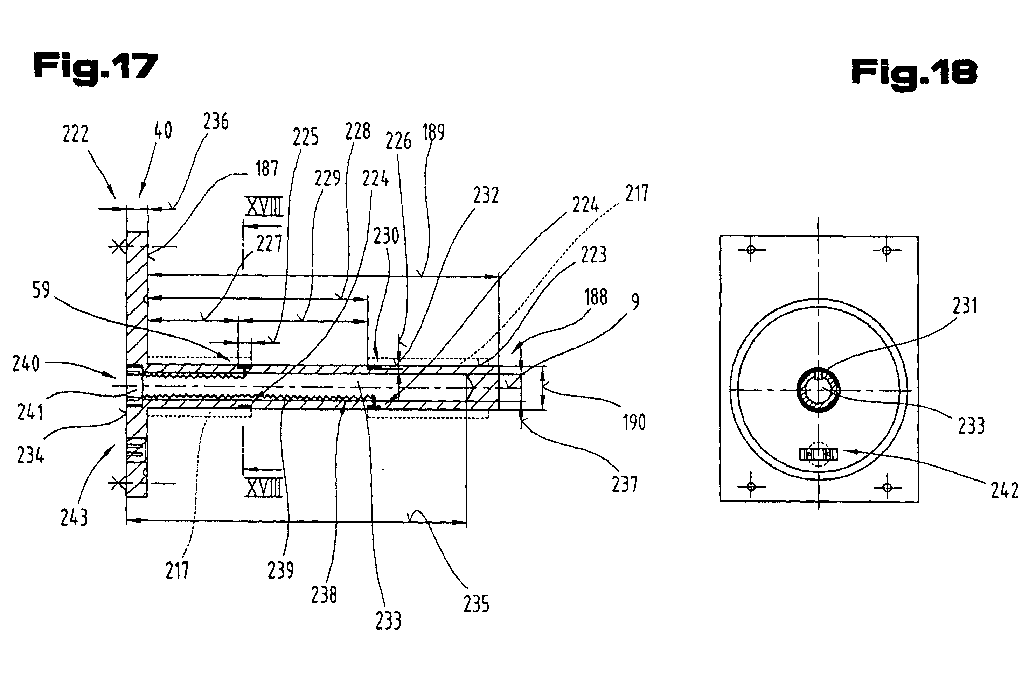

In den gemeinsam beschriebenen Fig. 17 und 18 ist ein Verschlußstück 40 des beispielsweise in Fig. 15 und 16 dargestellten, erfindungsgemäßen Schaltelementes 1 dargestellt. Dieses weist den Bolzen 188 auf, welcher vorzugsweise einstückig mit einer Flanschplatte 222 verbunden ist. Der Bolzen 188 überragt dabei die Innenfläche 187 der Flanschplatte 222 um eine Bolzenlänge 189 und weist den Bolzendurchmesser 190 auf. Der Bolzen 188, insbesondere eine Außenfläche 223, ist rotationssymmetrisch um die Mittelachse 9 angeordnet und besitzt beispielsweise 2 konzentrisch um die Mittelachse 9 verlaufende Vertiefungsnuten 224 mit einer parallel zur Mittelachse 9 gemessenen Nutbreite 225 und einer von der Außenfläche 223 in Richtung zur Mittelachse 9 ragenden Nuttiefe 226. Die der Flanschplatte 222 benachbarte Vertiefungsnut 224 ist von der Innenfläche 187 um einen Abstand 227 distanziert. Die von dieser Vertiefungsnut 224 in entgegengesetzter Richtung zur Flanschplatte 222 angeordnete Vertiefungsnut 224 ist von der Innenfläche 187 um eine Distanz 228 beabstandet. Aus der Differenz der Distanz 228 und des Abstandes 227 ergibt sich ein Abstand 229 zwischen den beiden Vertiefungsnuten 224.

In den Vertiefungsnuten 224 befinden sich Kontaktelemente 230, welche jeweils einen Kontaktsteg 231 besitzen, der einen durch die Nuttiefe 226 von der Außenfläche 223 in Richtung zur Mittelachse 9 beabstandeten Nutgrund 232 in Richtung zur Mittelachse 9 überragen. Der Bolzen 188 besitzt weiters eine Innenbohrung 233, welche von einer der Innenfläche 187 abgewandten und parallel zu dieser verlaufenden Außenfläche 234 der Flanschplatte 222 bis in eine Bohrungstiefe 235 verläuft, die größer ist als die Summe der Distanz 228, der Nutbreite 225 und einer die Außenfläche 234 von der Innenfläche 187 distanzierenden Flanschdicke 236. Die Innenbohrung 233 besitzt einen Bohrungsdurchmesser 237, welcher geringer ist als der Bolzendurchmesser 190.

Die Kontaktstege 231 sind so ausgebildet, daß sie bis in die Innenbohrung 233 ragen und sind über Leitungselemente 238, beispielsweise flexible Leitungen 239 mit einer in der Flanschplatte 222 angeordneten Kupplungsvorrichtung 240, beispielsweise einem Mehrfachstecker 241 leitungsverbunden. Dadurch ist es möglich, die Kontaktelemente 230 über die Kupplungsvorrichtung 240 mit elektrischem Strom zu beaufschlagen. Die Flanschplatte 222 besitzt an der Innenfläche 187 weitere Kontaktelemente 242, welche mit dem Mehrfachstecker 241 oder einer weiteren Kupplungsvorrichtung 243 verbunden sein können und zur Kontaktierung des beispielsweise in Fig. 15 dargestellten Mittels 30, insbesondere der Heizvorrichtung 35 dienen. Die im Bolzen 188 angeordneten Kontaktelemente 230 bilden dabei die Halte- und/oder Arretiervorrichtung 59 insofern aus, als durch das Beaufschlagen eines Kontaktelementes 230 mit elektrischem Strom und des dadurch erreichten Elektromagnetismus die strichliert dargestellten Anschläge 217 ebenfalls eine elektromagnetische Kraft erzeugen und so das in Fig. 15 dargestellte Bewegungselement 11a beispielsweise an dessen Stirnfläche 219 halten. Dadurch wird verhindert, daß das Bewegungselement 11a selbsttätig durch die im Verteilungskanal 12 herrschenden Druckverhältnisse bewegt wird.

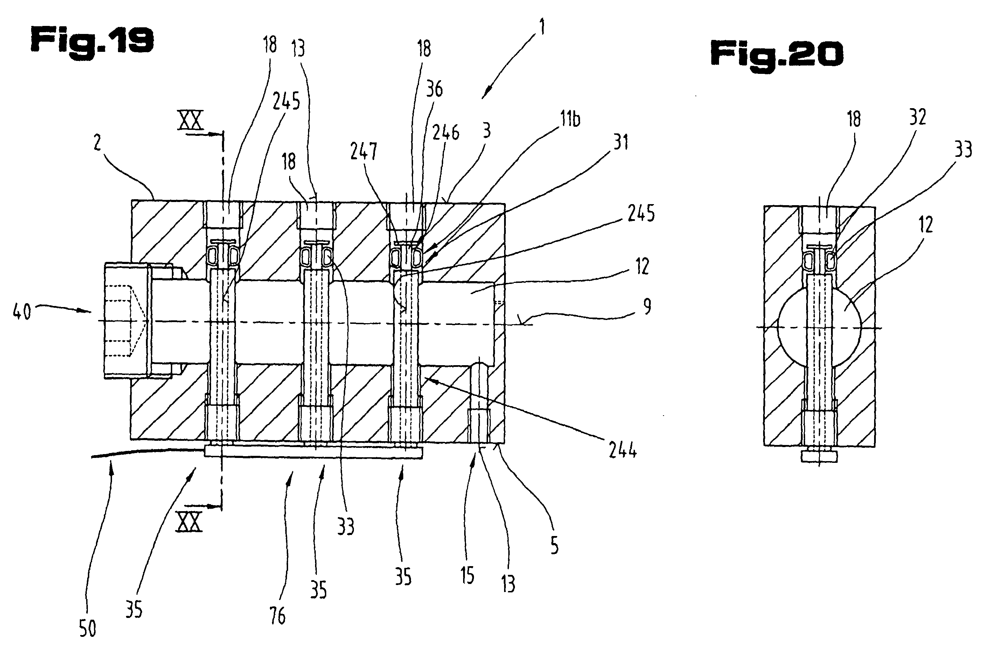

In den gemeinsam beschriebenen Fig. 19 und 20 ist eine andere Ausführungsvariante eines erfindungsgemäßen Schaltelementes 1, insbesondere eines Pneumatikventils 2 dargestellt. Dieses besitzt den parallel zur Oberseite 3 bzw. Unterseite 5 verlaufenden Verteilungskanal 12, von welchem beispielsweise drei Sekundärkanäle 18 zur Oberseite 3 und ein Zuströmkanal 15 zur Unterseite 5 verlaufen. Die Bohrungsachsen 13 sind dabei wiederum rechtwinkelig zur Mittelachse 9 angeordnet. Achsfluchtend zu den Bohrungsachsen 13 verlaufen vom Verteilungskanal 12 bis zur Unterseite 5 konzentrische Aufnahmeöffnungen 244, in welche die Heizvorrichtungen 35 bzw. Mittel 30 eingeführt sind. Die Heizvorrichtung 35 durchragt dabei die Aufnahmeöffnung 244 und den Verteilungskanal 12 und ragt in den Sekundärkanal 18 hinein, wobei eine Vorrichtungsachse 245 der Heizvorrichtung 35 rechtwinkelig zur Mittelachse 9 verläuft. Die Heizvorrichtung 35 weist im Bereich des Sekundärkanals 18 einen zylinderförmigen Fortsatz 246 auf, welcher das Heizelement 36 bildet. Dieses wird in Richtung der Oberseite 5 durch einen Bund 247 begrenzt. Konzentrisch um den Fortsatz 246 angeordnet, befindet sich das das Bewegungselement 11b bildende Übertragungselement 31, welches durch die die Innenräume 33 aufweisende Hülle 32 gebildet wird. Im Innenraum 33 befindet sich wiederum eine schnell verdampfende Flüssigkeit, wodurch die Hülle 32 bei Temperaturerhöhung mittels des Heizelementes 36 und der damit verbundenen Verdampfung der Flüssigkeit im Innenraum 33 expandiert und so den Sekundärkanal 18 abschließt. Die Heizvorrichtungen 35 werden beispielsweise über den gemeinsamen Stecker 76 und die beispielsweise als Busleitung ausgebildete Leitung 50 einzeln angesteuert. Der Verteilungskanal 12 wird wiederum durch das Verschlußstück 40 abgedichtet.

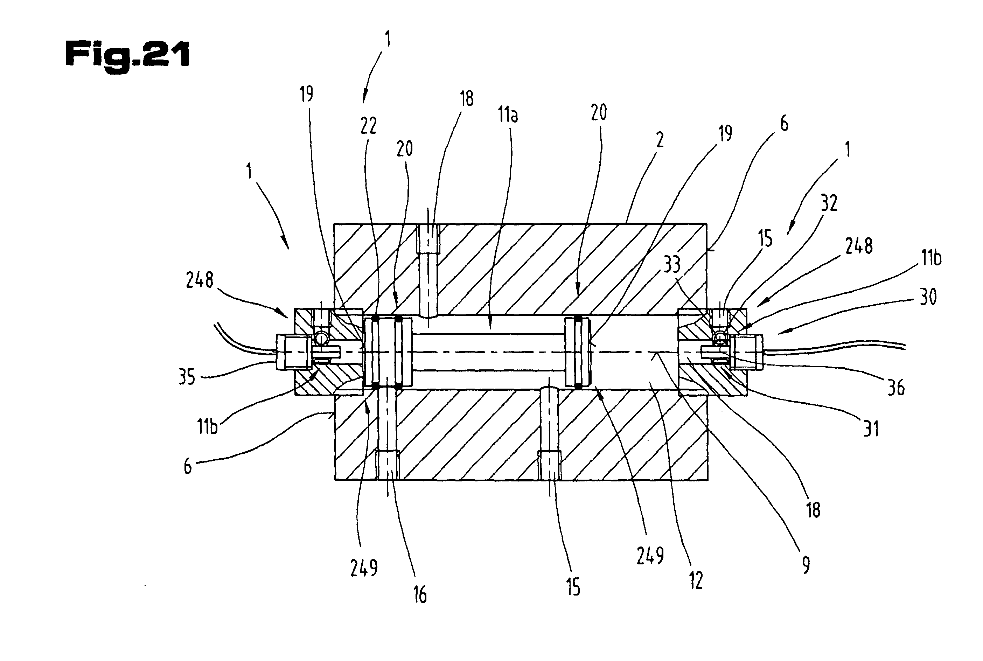

In der Fig. 21 ist eine weitere Ausführungsform des erfindungsgemäßen Schaltelementes 1, insbesondere ein Pneumatikventil 2 mit einem Sekundärkanal 18, einem Zuströmkanal 15 und einem Abströmkanal 16 dargestellt. Das Bewegungselement 11, welches wiederum Dichtelemente 22 an Bünden 20 aufweist, wird dabei über weitere Schaltelemente 1, insbesondere über Vorsteuerventile 248 pneumatisch betätigt. An den Stirnflächen 19 der Bünde 20 angeordnet, befinden sich Dämpfungselemente 249.

Das Vorsteuerventil 248 ist in den Verteilungskanal 12 von der Seitenfläche 6 eingeführt, insbesondere eingeschraubt und weist einen beispielsweise rechtwinkelig zur Mittelachse 9 verlaufenden Zuströmkanal 15 und einen achsfluchtend mit der Mittelachse 9 verlaufenden Sekundärkanal 18 auf. In diesem ist eine Heizvorrichtung 35 bzw. ein Mittel 30 eingeführt, welche ein bolzenförmiges Heizelement 36 besitzt, um welches konzentrisch darum das als Übertragungselement 31 ausgebildete Bewegungselement 11b angeordnet ist. Dieses besteht aus einer Hülle 32 mit einem Innenraum 33, in der wiederum eine schnell verdampfende Flüssigkeit angeordnet ist, welche im expandierten Zustand den Zuströmkanal 15 und/oder den Sekundärkanal 18 verschließt.

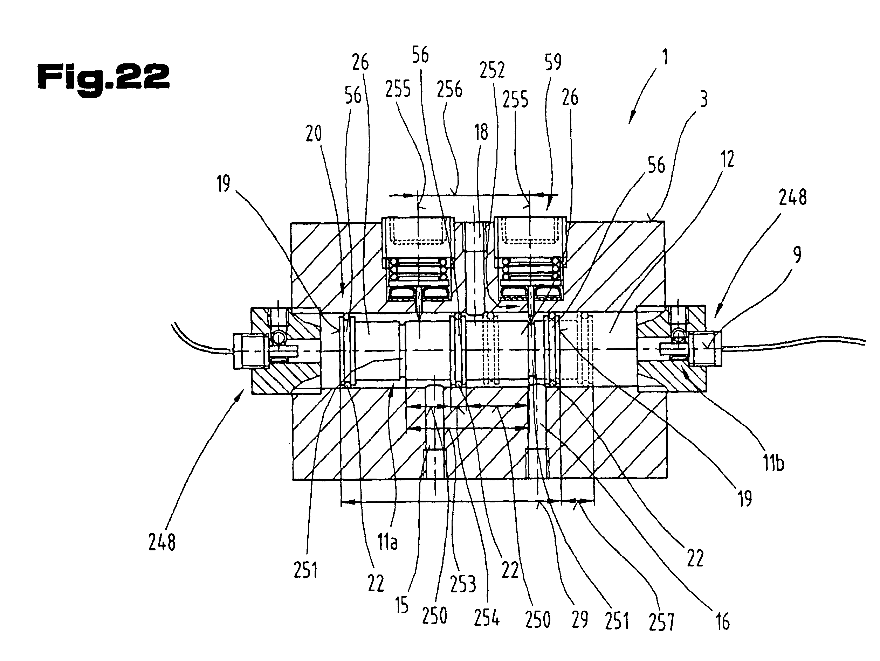

In der Fig. 22 ist eine weitere Ausführungsvariante des erfindungsgemäßen Schaltelementes 1 dargestellt. Das im Verteilungskanal 12 angeordnete, kolbenförmige Bewegungselement 11a besitzt wiederum mehrere Bünde 20, welche Aufnahmenuten 56 für Dichtelemente 22 ausbilden bzw. begrenzen. Jeweils ein Dichtelement 22 ist benachbart zu einem Vorsteuerventil 248, wie es beispielhaft in Fig. 21 beschrieben wurde, angeordnet. Das Bewegungselement 11a, insbesondere zwei einander abgewandte Stirnflächen 19 sind um den Abstand 29 voneinander distanziert, wobei in etwa um der Hälfte des Abstandes 29 eine weitere Aufnahmenut 56 für ein Dichtelement 22 angeordnet ist, welches entweder eine Strömungsverbindung zwischen Sekundärkanal 18 und Zuströmkanal 15 oder zwischen Sekundärkanal 18 und Abströmkanal 16 herstellt.

Von den diese Aufnahmenut 56 begrenzenden Bünden 20 um beispielsweise einen gleichen Abstand 250 distanziert, weist das Bewegungselement 11a, insbesondere die Zwischenstücke 26, konzentrisch um die Mittelachse 9 umlaufende Arretiernuten 251 auf. Beispielsweise in jener Schaltstellung des Bewegungselementes 11a, bei welcher eine Strömungsverbindung zwischen Sekundärkanal 18 und Abströmkanal 16 hergestellt ist, befindet sich ein Arretierelement 252 einer Halte- und/oder Arretiervorrichtung 59 in Eingriff mit der benachbart zum Abströmkanal 16 befindlichen Arretiernut 251, wodurch eine selbsttätige Relativbewegung des Bewegungselementes 11a, bedingt durch unterschiedliche Druckverhältnisse im Verteilungskanal 12, vermieden wird. Die Arretiemuten 251 sind voneinander um eine parallel zur Mittelachse 9 gemessene Distanz 253 beabstandet, welche gebildet wird aus der Summe des doppelten Abstandes 250 und einer Breite 254, welche die Bünde 20 einer Aufnahmenut 56 voneinander distanziert.

Die Halte- und/oder Arretiervorrichtungen 59 weisen rechtwinkelig zur Mittelachse 9 und rechtwinkelig zur Oberseite 3 verlaufende Mittelachsen 255 auf, welche voneinander um eine Weite 256 distanziert sind, die beispielsweise durch die Bohrungsachse 13 des Sekundärkanals 18 halbiert wird. Die Weite 256 ist dabei so dimensioniert, daß sie in etwa der Distanz 253 der beiden Arretiernuten 251 abzüglich eines Hubweges 257 des Bewegungselementes 11a entspricht.

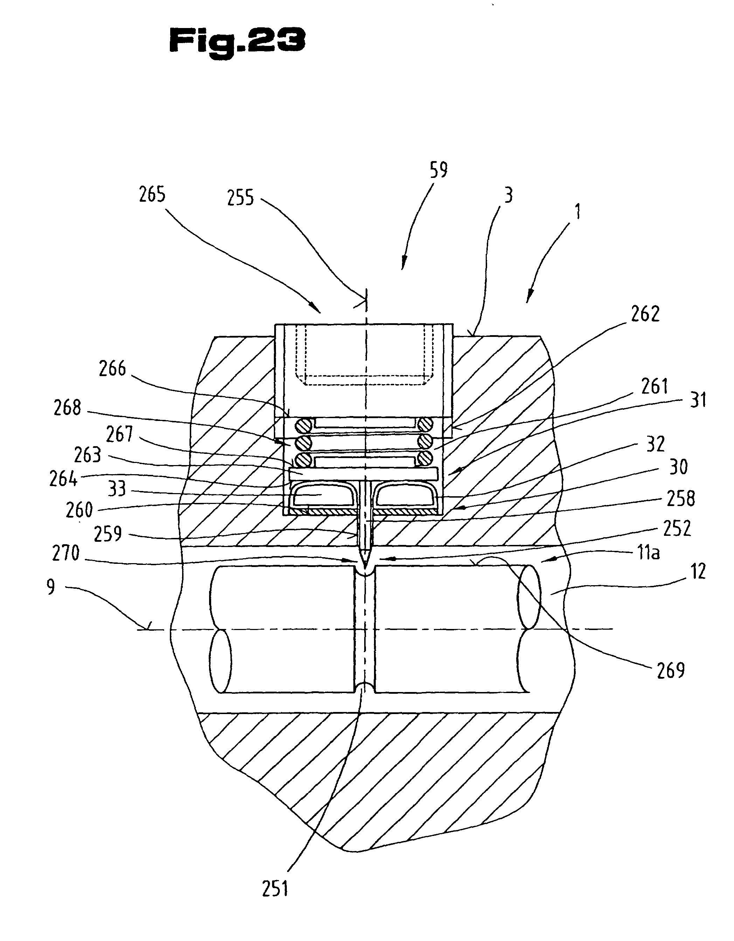

In der Fig. 23 ist eine Halte- und/oder Arretiervorrichtung 59 detaillierter dargestellt. Wie bereits beschrieben, besitzt das Bewegungselement 11a eine oder mehrere Arretiernuten 251, in die das Arretierelement 252 der Halte- und/oder Arretiervorrichtung 59 eingreifen kann. Das Arretierelement 252 besitzt einen zylindrischen Arretierzapfen 258, welcher eine im Schaltelement 1 angeordnete Bohrung 259 durchragt und bis in den Verteilungskanal 12 reicht. Diese Bohrung 259 erstreckt sich von einer konzentrisch um die Mittelachse 255 verlaufenden Planfläche 260 einer Ausnehmung 261, welche von der Oberseite 3 bis zur Planfläche 260 reicht und im Bereich der Oberseite 3 ein Innengewinde 262 besitzt. Der Arretierzapfen 258 ist vorzugsweise einstückig mit einer konzentrisch um die Mittelachse 255 verlaufenden Platte 263 verbunden, welche in der Ausnehmung 261 angeordnet ist. Im Bereich zwischen einer der Planfläche 260 zugewandten und parallel zu dieser verlaufenden Stirnfläche 264 der Platte 263 und der Planfläche 260 befindet sich ein Übertragungselement 31 und ein Mittel 30. Das Übertragungselement 31 besitzt eine den Arretierzapfen 258 umfassende Hülle 32, die einen Innenraum 33 umgrenzt, in dem eine hochsiedende Flüssigkeit angeordnet ist. Das Mittel 30 befindet sich dabei zwischen der Hülle 32 und der Planfläche 260. In das Innengewinde 262 eingeschraubt befindet sich ein Verschlußstück 265, welches eine konzentrisch um die Mittelachse 255 umlaufende Stirnfläche 266 besitzt, welche einer parallel zur Stirnfläche 264 der Platte 263 verlaufenden, dieser abgewandten Stirnfläche 267 der Platte 264 zugewandt ist.

In einem durch die Stirnfläche 266 des Verschlußstückes 265 und der Stirnfläche 267 der Platte 263 umgrenzten Bereich befindet sich ein Federelement 268, welches eine in Richtung zum im Verteilungskanal 12 angeordneten Bewegungselement 11a gerichtete Federkraft auf die Platte 263 und damit auf das Arretierelement 252 ausübt, sodaß dieses entweder in der Arretiernut 251 oder auf einer Oberfläche 269 des im Verteilungskanal 12 angeordneten Bewegungselementes 11a angedrückt wird. Liegt nun das Arretierelement 252 an der Oberfläche 269 an und wird das im Verteilungskanal 12 angeordnete Bewegungselement 11a längs der Mittelachse 9 verschoben, so rastet der Arretierzapfen 258 in die Arretiernut 251 ein und es wird eine selbständige Relativbewegung des Bewegungselementes 11a verhindert.

Soll nun die Beweglichkeit des Bewegungselementes 11a wieder hergestellt werden, so wird die im Innenraum 33 der Hülle 32 angeordnete, hochsiedende Flüssigkeit über das Mittel 30 erwärmt, wodurch es zu einer Volumszunahme der Flüssigkeit und einer Ausdehnung der Hülle 32 kommt und dadurch eine Druckkraft auf die Stirnfläche 264 der Platte 263 ausgeübt wird und diese in Richtung zum Verschlußstück 265 entgegen der Kraft des Federelementes 268 bewegt. Dadurch wird der Arretierzapfen 258 aus der Arretiernut 251 herausgehoben und das Bewegungselement 11a freigegeben. Durch die Relativbewegung des Bewegungselementes 11a kommt es zu einem Seitenversatz zwischen dem Arretierzapfen 258 und der Arretiemut 251. Da es nur zu einer sehr kurzzeitigen Volumszunahme der Hülle 32 kommt, wird der Arretierzapfen 258 bei Volumsabnahme der im Innenraum 33 angeordneten, hochsiedenden Flüssigkeit, d.h. bei Abkühlung derselben, auf die Oberfläche 269 aufgedrückt und gleitet dabei die Oberfläche 269, d.h. das Bewegungselement 11a am Arretierzapfen 258, insbesondere an einer Spitze 270, ab.

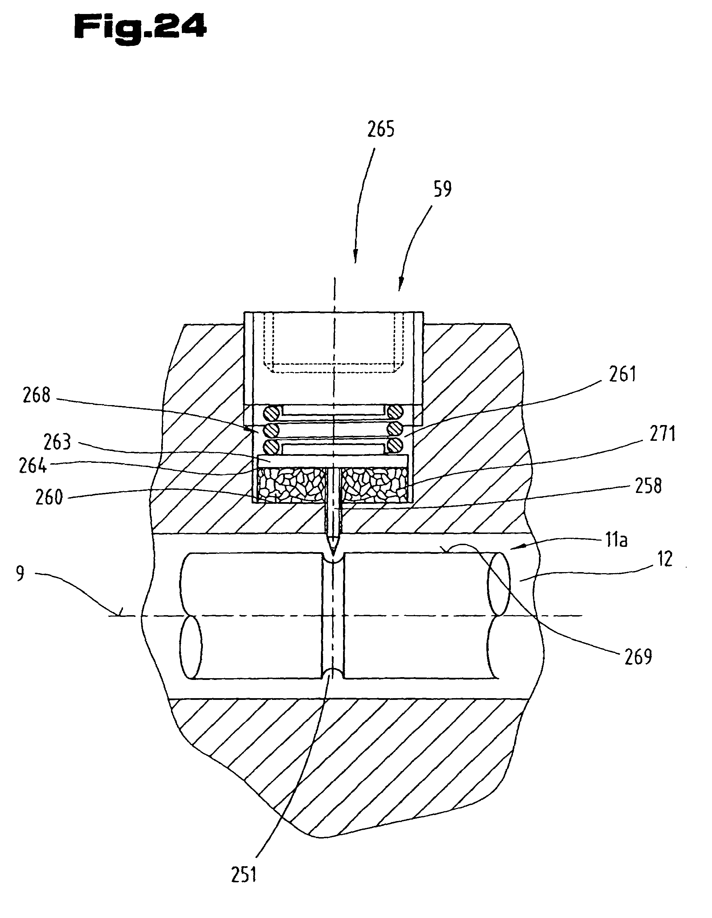

In der Fig. 24 ist eine andere Ausführungsvariante der Halte- und/oder Arretiervorrichtung 59 dargestellt. Diese besitzt anstelle des in Fig. 23 dargestellten Übertragungselementes 31 mit der Hülle 32 ein Piezoelement 271, welches zwischen der Planfläche 260, der Ausnehmung 261 und der Stirnfläche 264 der Platte 263 angeordnet ist und mit einer Energiequelle verbunden ist.

Soll nun der Arretierzapfen 258 aus der Arretiernut 251 entfernt werden, so wird an das Piezoelement 271 eine elektrische Spannung angelegt, wodurch es zu einer Volumsänderung desselben kommt und die Platte 263 entgegen der Federkraft des Federelementes 268 in Richtung zum Verschlußstück 265 bewegt wird. Wird das Piezoelement 271 spannungslos, so nimmt es sein ursprüngliches Volumen wieder ein und das Arretierelement 258 wird über das Federelement 268 entweder an die Oberfläche 269 des im Verteilungskanal 12 angeordneten Bewegungselementes 11a oder in die Arretiemut 251 bewegt. Liegt der Arretierzapfen 258 an der Oberfläche 269 an und wird das Bewegungselement 11a im Verteilungskanal 12 längs der Mittelachse 9 bewegt, so rastet der Arretierzapfen 258 aufgrund der Federkraft des Federelementes 268 in die Arretiemut 251 ein und das Bewegungselement 11a wird in der gewünschten Position gehalten.

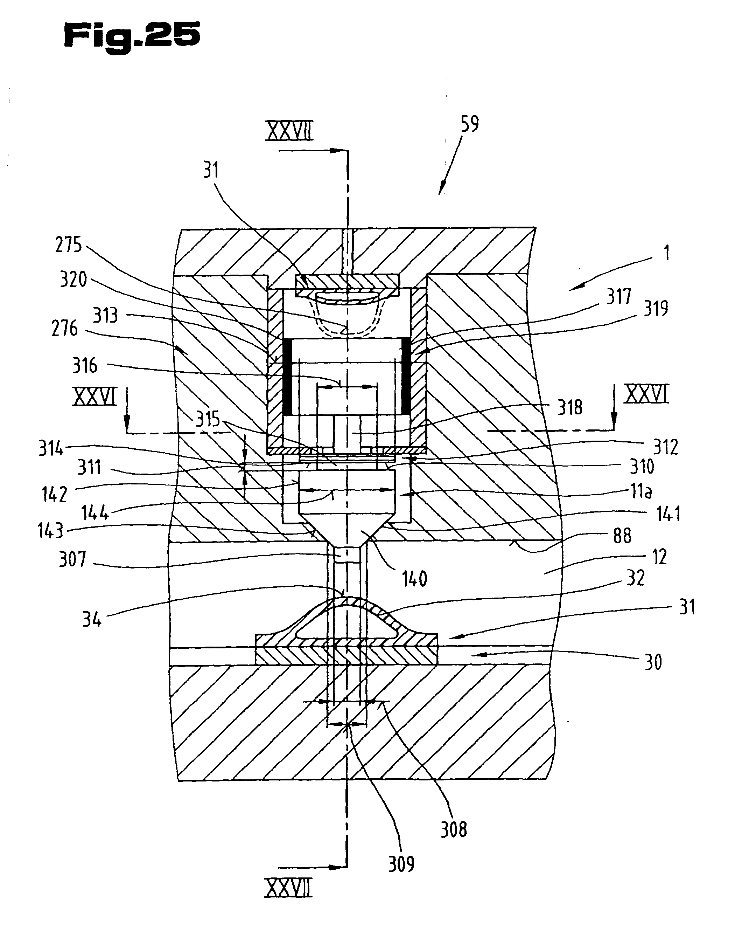

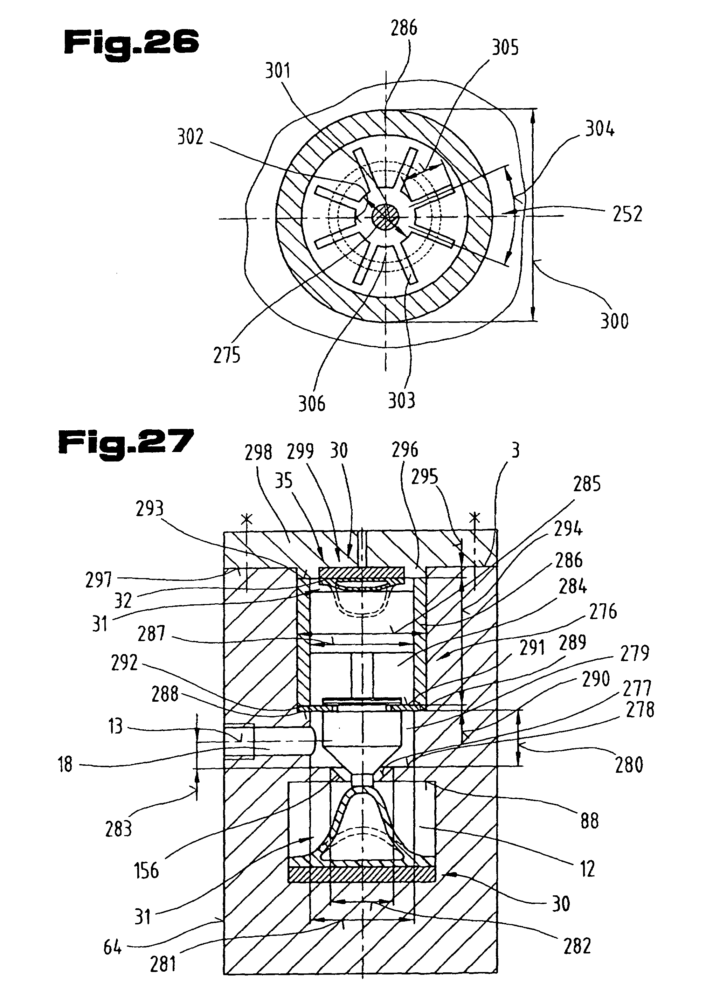

Wie in den gemeinsam beschriebenen Fig. 25 bis 27 ist eine andere Ausführungsvariante der Halte- und/oder Arretiervorrichtung 59 gezeigt. Das Bewegungselement 11a ist als Hubkolben 140 ausgebildet, welcher in einer im Schaltelement 1 angeordneten, vorzugsweise zylindrisch um eine Hubkolbenachse 275 verlaufenden Hubkolbenaufnahme 276 angeordnet ist. Die Hubkolbenachse 275 verläuft dabei beispielsweise rechtwinkelig zu einer Oberfläche 88 des Verteilungskanals 12. Die Hubkolbenaufnahme 276 besitzt im Bereich der Oberfläche 88 einen Dichtsitz 156, welcher eine kegelstumpfförmig verlaufende Dichtoberfläche 277 besitzt, die rotationssymmetrisch um die Hubkolbenachse 275 verläuft und von einer parallel zur Oberfläche 88 verlaufenden Planfläche 278 einer zylindrisch um die Hubkolbenachse 275 verlaufenden Hubkolbenbohrung 279 konisch verjüngend in Richtung zur Oberfläche 88 angeordnet ist.

Die Hubkolbenbohrung 279 verläuft von der Planfläche 278 in entgegengesetzter Richtung zur Oberfläche 88 bis in eine Höhe 280 in einem Durchmesser 281, welcher größer ist als ein in der Planfläche 278 liegender Dichtdurchmesser 282 des Dichtsitzes 156. Rechtwinkelig zur Hubkolbenachse 275 erstreckt sich von der Hubkolbenbohrung 279 bis zur Rückseite 64 der Sekundärkanal 18, dessen Bohrungsachse 13 von der Planfläche 278 um einen Abstand 283 distanziert ist, der beispielsweise geringer ist als die Höhe 280. Von der Höhe 280 bis zur Oberseite 3 des Schaltelementes 1 verläuft eine Führungsbohrung 284 zylindrisch um die Hubkolbenachse 275, welche einen Bohrungsdurchmesser 285 besitzt, der größer ist als der Durchmesser 281 der Hubkolbenbohrung 279. In der Führungsbohrung 284 angeordnet befindet sich eine Führungshülse 286, die einen parallel zum Bohrungsdurchmesser 285 gemessenen Innendurchmesser 287 besitzt, der geringer ist als der Bohrungsdurchmesser 285 und beispielsweise geringer ist als der Durchmesser 281.

Im Bereich zwischen der Führungshülse 286 und der Hubkolbenbohrung 279 ist ein Arretierelement 252 angeordnet. Eine der Planfläche 278 zugewandte Unterseite 288 des Arretierelementes 252 liegt ebenflächig auf einer parallel zur Planfläche 275 verlaufenden Ringfläche 289 an, welche gebildet wird durch die Führungsbohrung 284, deren Bohrungsdurchmesser 285, wie bereits erwähnt, größer ist als der Durchmesser 281 der Hubkolbenbohrung 279. An einer der Unterseite 288 abgewandten und von dieser um eine Dicke 290 in entgegengesetzter Richtung zur Oberfläche 88 distanzierten Oberseite 291 des Arretierelementes 252 liegt eine die Führungshülse 286 in Richtung zum Verteilungskanal 12 begrenzenden Ringfläche 292 an. Diese Ringfläche 292 ist von einer abgewandten und parallel zu dieser verlaufenden Ringfläche 293 der Führungshülse 286 um eine Hülsenhöhe 294 in entgegengesetzter Richtung zum Verteilungskanal 12 beabstandet. Die Ringfläche 293 ist von der Oberseite 3 um eine Tiefe 295 in Richtung zum Verteilungskanal 12 beabstandet.

In den durch die Tiefe 295 und dem Bohrungsdurchmesser 285 gebildeten zylindrischen Bereich greift ein zylindrisch um die Hubkolbenachse 275 verlaufender Fortsatz 296 ein, welcher eine der Oberseite 3 zugewandte Innenseite 297 einer Deckplatte 298 in Richtung zum Verteilungskanal 12 überragt. Der Fortsatz 296 besitzt eine Einformung 299, in der das Mittel 30, insbesondere die Heizvorrichtung 35 angeordnet ist, welche mit einem durch die Hülle 32 gebildeten Übertragungselement 31 bewegungsfest verbunden ist. Die Hülle 32 überragt dabei die Heizvorrichtung 35 bzw. die Ringfläche 293 der Führungshülse 286 in Richtung zum Verteilungskanal 12. Das Arretierelement 252 weist einen Außendurchmesser 300 auf, welcher dem Bohrungsdurchmesser 285 der Führungsbohrung 284 entspricht. Es besitzt weiters einen Innendurchmesser 301, welcher geringer ist als der Außendurchmesser 300. Der Innendurchmesser 301 begrenzt einen konzentrisch um die Hubkolbenachse 275 verlaufende Innenstirnfläche 302. Von der Innenstimfläche 302 verlaufen sternförmig um die Hubkolbenachse 275 angeordnete Schlitze 303, welche voneinander jeweils um einen Winkelversatz 304 beabstandet sind. Die Schlitze 303 besitzen eine von der Innenstirnfläche 302 in Richtung zur Führungshülse 286 gemessene Schlitztiefe 305, welche so gewählt ist, daß die Summe der doppelten Schlitztiefe 305 und des Innendurchmessers 301 nicht größer ist als der Außendurchmesser 300 des Arretierelementes 252. Durch die Schlitze 303 werden somit ebenfalls sternförmig um die Hubkolbenachse 275 angeordnete Federfortsätze 306 ausgebildet.

Der Hubkolben 140 weist in einem dem Verteilungskanal 12 zugeordneten Bereich einen kegelstumpfförmigen Teil mit einem drehzylindrisch um die Hubkolbenachse 275 verlaufenden Kegelmantel 143 und einem von diesem in entgegengesetzter Richtung zum Verteilungskanal 12 angeordneten Zylindermantel 142 auf. Vom Kegelmantel 143 in Richtung zum Verteilungskanal 12 erstreckt sich ein zylindrischer Fortsatz 307, der einen Fortsatzdurchmesser 308 besitzt, welcher kleiner ist als ein Dichtdurchmesser 309, der die Dichtoberfläche 277 im Bereich der Oberfläche 88 begrenzt. Der Zylindermantel 142 weist einen Manteldurchmesser 144 auf, welcher größer ist als der Dichtdurchmesser 282, jedoch geringer ist als der Durchmesser 281 der Hubkolbenbohrung 279. Der Zylindermantel 142 wird in entgegengesetzter Richtung zum Verteilungskanal 12 durch eine Planfläche 310 begrenzt. Von dieser Planfläche 310 um eine parallel zur Hubkolbenachse 275 in entgegengesetzter Richtung zum Verteilungskanal 12 gemessene Breite 311 beabstandet, besitzt der Hubkolben 140 einen konzentrisch um die Hubkolbenachse 272 verlaufenden Arretierbund 312. Dieser wird von einem Bunddurchmesser 313 begrenzt, welcher beispielsweise dem Manteldurchmesser 144 entspricht. Im Bereich der Breite 311 verläuft zwischen der Planfläche 310 und einer dieser zugewandten Bundfläche 314 ein Verbindungsstück 315, welches einen Durchmesser 316 besitzt, der geringer ist als der Bunddurchmesser 313 und der Innendurchmesser 301 des Arretierelementes 252. Der Hubkolben 140 besitzt weiters einen zylindrisch um die Hubkolbenachse 272 verlaufenden Führungskolben 317, welcher mit dem Arretierbund 312 über ein Zwischenstück 318 verbunden ist und der an einer Außenseite 319 ein Gleitelement 320 besitzt, welches längs der Innenseite der Führungshülse 286 abgleitet. Im Verteilungskanal 12 befindet sich wiederum ein durch die Hülle 32 gebildetes Übertragungselement 31, welches über ein Mittel 30 thermisch beaufschlagbar ist. Soll nun eine Strömungsverbindung zwischen dem Verteilungskanal 12 und dem Sekundärkanal 18 hergestellt werden, so wird das im Verteilungskanal 12 angeordnete, durch die Hülle 32 gebildete Übertragungselement 31 thermisch beaufschlagt und expandiert, wodurch die Außenfläche 34 der Hülle 32 den Fortsatz 307 berührt und den Hubkolben 140 in entgegengesetzter Richtung zum Verteilungskanal 12 bewegt. Dabei bewegt sich der Kegelmantel 143 von der Dichtoberfläche 277 weg, wodurch ein Strömungskanal im Bereich der Oberfläche 88 geöffnet wird, der aus der Differenz des Dichtdurchmessers 309 und des Fortsatzdurchmessers 308 gebildet wird. Gleichzeitig wird der Arretierbund 312 an die Unterseite 288 des Arretierelementes 252 gedrückt, wodurch die Federfortsätze 306 elastisch in entgegengesetzter Richtung zum Verteilungskanal 12 gedrückt werden, bis der Innendurchmesser 301 die Größe des Bunddurchmessers 313 erreicht und der Arretierbund 312 in etwa an der Innenstimfläche 302 des Arretierelementes 252 in entgegengesetzter Richtung zum Verteilungskanal 12 abgleitet, bis die Bundfläche 314 von der Ringfläche 292 in entgegengesetzter Richtung zum Verteilungskanal 12 beabstandet wird.

Erreicht der Hubkolben 140 diese Position, so federn die Federfortsätze 306 wieder in ihre ursprüngliche Lage zurück und es befinden sich die Oberseite 291 des Arretierelementes 252 in etwa in einer Ebene mit der Bundfläche 314. Dadurch wird eine selbsttätige Relativbewegung des Hubkolbens 140 in Richtung zum Verteilungskanal 12 verhindert. Soll nun der Strömungskanal zwischen Verteilungskanal 12 und Sekundärkanal 18 verschlossen werden, so wird die im Fortsatz 296 angeordnete Heizvorrichtung 35 erwärmt, sodaß das durch die Hülle 32 gebildete, mit der Heizvorrichtung 35 verbundene Übertragungselement 31 expandiert wird und den Führungskolben 317 in Richtung zum Verteilungskanal 12 drückt, wodurch der Arretierbund 312 in Richtung zum Verteilungskanal 12 gedrückt wird, was bewirkt, daß die Federfortsätze 306 in Richtung zum Verteilungskanal 12 bewegt werden und schließlich der Kegelmantel 143 dichtend an der Dichtoberfläche 277 anliegt.

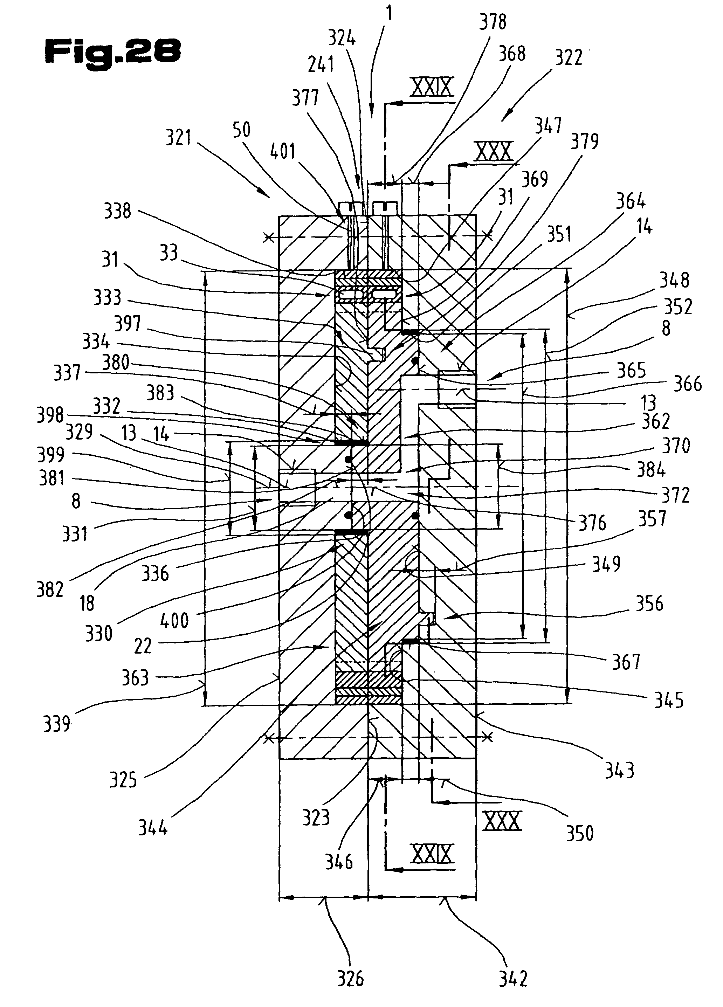

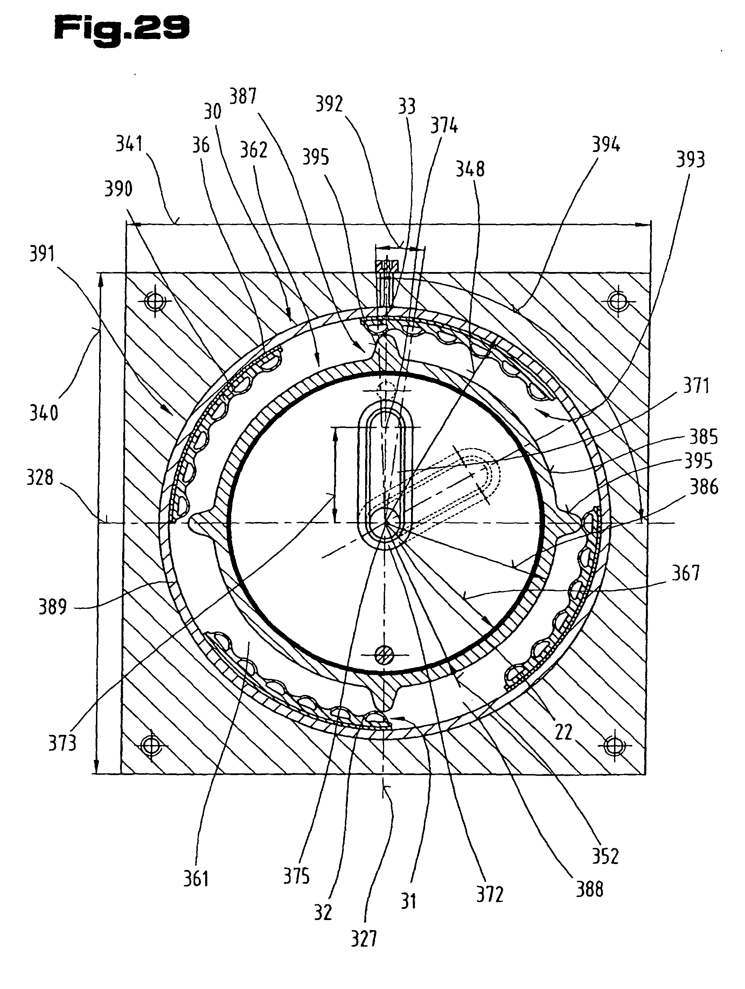

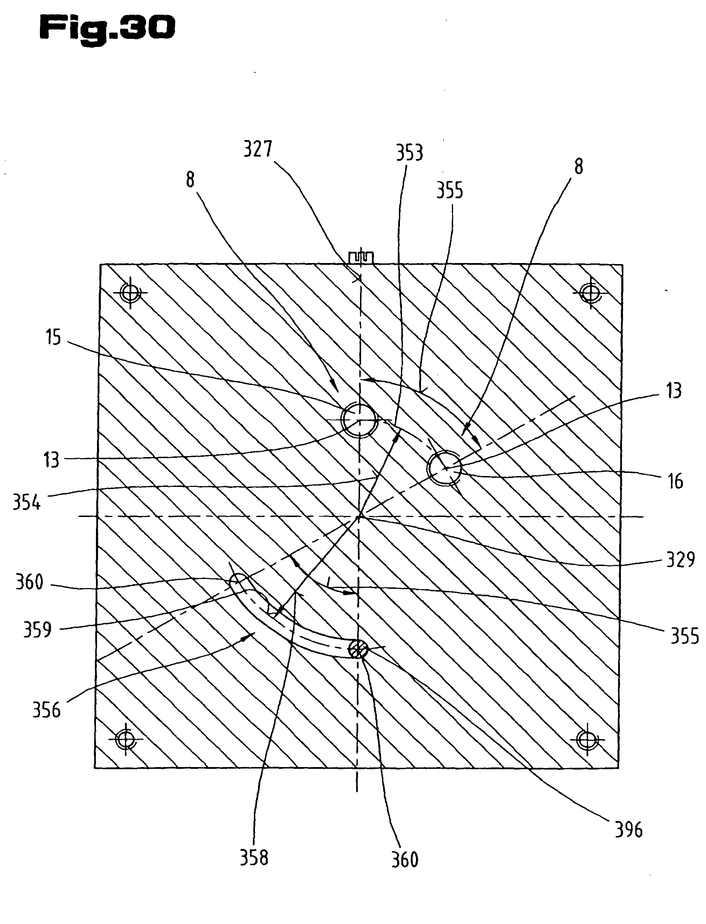

In den gemeinsam beschriebenen Fig. 28 bis 30 ist eine andere Ausführungsform des erfindungsgemäßen Schaltelementes 1 gezeigt. Das Schaltelement 1 besitzt einen Gehäuseteil 321, welcher mit einem weiteren Gehäuseteil 322 an einander zugewandten Innenflächen 323, 324 lösbar oder unlösbar verbunden ist. Der Gehäuseteil 321 wird in entgegengesetzter Richtung zum Gehäuseteil 322 durch eine parallel zur Innenfläche 323 verlaufenden Außenfläche 325 begrenzt, welche von der Innenfläche 323 in entgegengesetzter Richtung zum Gehäuseteil 322 um eine Gehäuseteiltiefe 326 beabstandet ist. Die Gehäuseteile 321, 322 besitzen rechtwinkelig zu den Innenfläche 323, 324 und rechtwinkelig zueinander angeordnete Mittelebenen 327, 328. Der Schnittbereich der beiden Mittelebenen 327, 328 bildet eine Mittelachse 329 aus. Der Gehäuseteil 321 weist in einem der Außenfläche 325 abgewandten Bereich einen konzentrisch um die Mittelachse 329 verlaufenden Ansatz 330 auf, welcher durch einen Ansatzdurchmesser 331 begrenzt wird, der eine konzentrisch um die Mittelachse 329 verlaufende Ansatzfläche 332 außen umgrenzt. Von der Ansatzfläche 332 in entgegengesetzter Richtung zur Mittelachse 329 erstreckt sich eine kreisringförmig um die Mittelachse 329 verlaufende Einformung 333, welche eine in einer rechtwinkelig zur Mittelachse 329 liegenden Ebene befindliche Stirnfläche 334 besitzt, die von einer die Ansatzfläche 332 in entgegengesetzter Richtung zur Außenfläche 325 begrenzenden, parallel zu dieser verlaufenden Planfläche 336 des Ansatzes 330 um eine Einformungstiefe 337 in Richtung zur Außenfläche 325 beabstandet ist. Die Einformung 333 wird durch eine konzentrisch um die Mittelachse 329 verlaufende, der Ansatzfläche 332 zugewandten Innenfläche 338 in entgegengesetzter Richtung zur Mittelachse 329 begrenzt, welche in einen Einformungsdurchmesser 339 konzentrisch um die Mittelachse 329 verläuft. Die Gehäuseteile 321, 322 besitzen eine Gehäuseteilhöhe 340 und eine Gehäuseteilbreite 341. Der Einformungsdurchmesser 339 ist dabei kleiner als die Gehäuseteilhöhe 340 bzw. die Gehäuseteilbreite 341, die beispielsweise gleich groß ausgebildet sind. Längs der Mittelachse 329 verläuft ein Kanal 8, wobei die Mittelachse 329 die Bohrungsachse 13 des Kanals 8 bildet, welcher als Sekundärkanal 18 ausgebildet ist. Dieser besitzt das Anschlußgewinde 14 im Bereich der Außenfläche 325. Im Bereich der Planfläche 336 ist ein Dichtelement 22 angeordnet, welches vorzugsweise konzentrisch um die Mittelachse 329 verläuft.

Der Gehäuseteil 322 weist eine von der Innenfläche 324 um eine Gehäuseteiltiefe 342 in entgegengesetzter Richtung zum Gehäuseteil 321 distanziert und parallel zur Außenfläche 325 verlaufende Außenfläche 343 auf. Er besitzt weiters eine rotationssymmetrisch um die Mittelachse 329 verlaufende Einformung 344, welche eine rechtwinkelig zur Mittelachse 329 verlaufende erste Stirnfläche 345 besitzt, die von der Innenfläche 324 um eine Stirnflächentiefe 346 in entgegengesetzter Richtung zum Gehäuseteil 321 distanziert ist und von einer rotationssymmetrisch um die Mittelachse 329 verlaufenden Innenfläche 347 in entgegengesetzter Richtung zur Mittelachse 329 umgrenzt wird, welche in einem ersten Einformungsdurchmesser 348 konzentrisch um die Mittelachse 329 verläuft. Der erste Einformungsdurchmesser 348 entspricht dabei dem Einformungsdurchmesser 339, der im Gehäuseteil 321 angeordneten Einformung 333. Die Einformung 344 besitzt eine parallel zur ersten Stirnfläche 345 verlaufende zweite Stirnfläche 349, die von der ersten Stirnfläche 345 in entgegengesetzter Richtung zur Innenfläche 324 um eine Stirnflächentiefe 350 in Richtung zur Außenfläche 343 beabstandet ist. Diese zweite Stimfläche 349 wird von einer Innenfläche 351 begrenzt, welche einen konzentrisch um die Mittelachse 329 umlaufenden zweiten Einformungsdurchmesser 352 aufweist, der kleiner ist als der erste Einformungsdurchmesser 348 und konzentrisch zu diesem und zur Mittelachse 349 angeordnet ist. Von der Außenfläche 343 bis zur zweiten Stirnfläche 349 erstrecken sich Kanäle 8, deren Bohrungsachsen 13 parallel zur Mittelachse 329 und rechtwinkelig zur Außenfläche 343 verlaufen. Die Bohrungsachsen 13 liegen in einem konzentrisch um die Mittelachse 329 umlaufenden Lochkreis 353 mit einem von der Mittelachse 329 gemessenen Lochkreisradius 354. Ein Kanal 8 ist dabei als Zuströmkanal 15 ausgebildet, dessen Bohrungsachse 13 beispielsweise in der der Mittelebene 327 liegt. Der weitere Kanal 8 ist beispielsweise als Abströmkanal 16 ausgebildet, dessen Bohrungsachse 13 von der Bohrungsachse 13 des Zuströmkanals 15 um einen Winkel 355 von beispielsweise 60 Grad beabstandet ist. Im Bereich der Außenfläche 343 besitzen diese Kanäle 8 wiederum ein Anschlußgewinde 14.

Der Gehäuseteil 322 besitzt weiters eine von der zweiten Stirnfläche 349 in Richtung zur Außenfläche 341 ragende Vertiefungsnut 356. Die Vertiefungsnut 356 besitzt eine rechtwinkelig zur zweiten Stirnfläche 349 gemessene Nuttiefe 357 und ist kreisbogenförmig um die Mittelachse 329 angeordnet, wobei sie eine in einem Radius 358 um die Mittelachse 329 verlaufende, kreisbogenförmige Mittellinie 359 besitzt. In den Endbereichen besitzt die Vertiefungsnut 356 einen halbkreisförmigen Verlauf mit Mittelpunkten 360, die auf der Mittellinie 359 liegen und voneinander ebenfalls um den Winkel 355 distanziert sind.

Durch die Einformung 333 des Gehäuseteiles 321 und die Einformung 344 des Gehäuseteiles 322 wird ein Innenraum 361 geschaffen. In diesem befinden sich drehbeweglich angeordnet beispielsweise zwei als Bewegungselemente ausgebildete Rotationskörper 362, 363, wobei beispielsweise der Rotationskörper 362 dem Gehäuseteil 322 und der Rotationskörper 363 dem Gehäuseteil 321 zugeordnet ist. Der Rotationskörper 362 besitzt einen Ansatz 364, welcher eine Ansatzplanfläche 365 besitzt, die der zweiten Stirnfläche 349 zugewandt ist und welche von einem Ansatzdurchmesser 366 begrenzt wird, der eine konzentrisch um die Mittelachse 329 umlaufende Ansatzmantelfläche 367 begrenzt. Die Ansatzmantelfläche 367 ragt in entgegengesetzter Richtung zur zweiten Stirnfläche 249 von der Ansatzplanfläche 365 um eine Ansatzlänge 368 in Richtung zum Gehäuseteil 321 vor und wird durch eine parallel zur Ansatzplanfläche 365 verlaufende Planfläche 369 begrenzt.

Der Rotationskörper 362 besitzt weiters einen Verteilungskanal 370, welcher aus einer im Bereich der Ansatzplanfläche 365 angeordneten Längsnut 371 und einer Bohrung 372 besteht. Die Längsnut 371 ist ähnlich einem Langloch ausgebildet und besitzt zwei um eine Länge 373 voneinander distanzierte Mittelachsen 374, 375, wobei die Mittelachse 375 gleichzeitig eine Bohrungsachse 376 der Bohrung 372 bildet, welche wiederum deckungsgleich mit der Bohrungsachse 13 des im Gehäuseteil 321 angeordneten Sekundärkanals 18 ist. Die Länge 373 der Längsnut 371 entspricht dabei dem Lochkreisradius 354, der im Gehäuseteil 322 angeordneten Kanäle 8. Die Längsnut 371 wird weiters durch ein Dichtelement 22 außen umgrenzt.

Von der Planfläche 369 abgewandt und parallel zu dieser verlaufend besitzt der Rotationskörper 362 eine weitere Planfläche 377, welche von der Planfläche 369 um eine Breite 378 in Richtung zum Gehäuseteil 321 beabstandet ist. Die Planfläche 377 besitzt eine zylinderförmige Vertiefung 379, welche exzentrisch zur Mittelachse 329 angeordnet ist. Die Planfläche 377 wird weiters von einem zylindrisch um die Mittelachse 329 verlaufenden Ansatz 380 in Richtung zum Gehäuseteil 321 überragt. Dieser besitzt eine in einer rechtwinkelig zur Mittelachse 329 liegenden Ebene befindliche Ansatzplanfläche 381, welche von der Planfläche 377 um eine Ansatzlänge 382 in Richtung zum Gehäuseteil 321 beabstandet ist. Die Ansatzplanfläche 381 wird weiters von einer konzentrisch um die Mittelachse 329 verlaufenden Ansatzmantelfläche 383 umgrenzt, welche von einem Ansatzdurchmesser 384 begrenzt wird. Dieser entspricht dabei dem Ansatzdurchmesser 331 des Ansatzes 330 des Gehäuseteils 321. Die Planflächen 369 und 377 werden von einer konzentrisch um die Mittelachse 329 verlaufenden Stirnfläche 385 begrenzt, welche in einen Stimflächendurchmesser 386 um die Mittelachse 329 umläuft. Die Stirnfläche 385 wird weiters in entgegengesetzter Richtung zur Mittelachse 329 von zahnförmigen Fortsätzen 387 überragt. Diese sind voneinander jeweils um 90 Grad beabstandet, sodaß der Rotationskörper 362 insgesamt vier zahnförmige Fortsätze 387 aufweist.

Die Stirnfläche 385 und die Innenfläche 347 der Einformung 344 des Gehäuseteiles 322 umgrenzen einen kreisringförmig um die Mittelachse 329 verlaufenden Zwischenraum 388. In diesem angeordnet befinden sich Mittel 30 und durch Hüllen 32 gebildete Übertragungselemente 31. Die Mittel 30 sind vorzugsweise unlösbar mit einem konzentrisch um die Mittelachse 329 umlaufenden, ringförmigen Basiskörper 389 verbunden und besitzen den Rotationskörper 362 zugewandte Heizflächen 390, die in Richtung zur Mittelachse 329 von den Hüllen 32 überragt werden. Beispielsweise sechs Heizelemente 36 sind zu einer Heizvorrichtungsgruppe 391 zusammengefaßt, wobei im Innenraum 361 vier derartige Heizvorrichtungsgruppen 391 vorhanden sind. Jeweils einem Heizelement 36 ist ein Innenraum 33 der Hülle 32 zugeordnet. Ein Innenraum 33 ist dabei von einem benachbarten Innenraum 33 um einen Winkel 392 versetzt, der beispielsweise 10 Grad beträgt. Beispielsweise jeweils eine, sechs Innenräume 33 aufweisende Hülle 32, ist zu einer Übertragungselementengruppe 393 zusammengefaßt, wobei die Innenräume 33 dieser Übertragungselementengruppe 393 mit den Heizelementen 36 der dieser zugeordneten Heizvorrichtungsgruppe 391 korrespondieren.

Die Übertragungselementengruppen 393 und damit auch die Heizvorrichtungsgruppen 391 sind so zueinander angeordnet, daß im Uhrzeigersinn betrachtet ein erster Innenraum 33 einer ersten Übertragungselementengruppe 393 vom ersten Innenraum 33 der zweiten Übertragungselementengruppe 393 um einen Winkelversatz 394 von 92,5 Grad beabstandet ist. Ebenso verhält es sich mit den ersten Innenräumen 33 der dritten und vierten Übertragungselementengruppe 393. Der erste Innenraum 33 der vierten Übertragungselementengruppe 393 ist vom zweiten Innenraum 33 der ersten Übertragungselementengruppe 393 ebenfalls um den Winkelversatz 394 versetzt. Jeder Übertragungselementengruppe 393 ist ein Fortsatz 387 des Rotationskörpers 362 zugeordnet.

Soll nun der Strömungsweg vom Zuströmkanal 15 zum Sekundärkanal 18 dahingehend geändert werden, daß ein Strömungsweg zwischen Abströmkanal 16 und Sekundärkanal 18 hergestellt wird, so muß die Längsnut 371 des Verteilungskanals 370 in eine Deckungslage mit dem Abströmkanal 16 gebracht werden. Zu diesem Zwecke wird der Rotationskörper 362 um die Mittelachse 329 in eine im Uhrzeigersinn gerichtete Rotationsbewegung gesetzt. Dies geschieht dadurch, daß nun der erste Innenraum 33 der ersten Übertragungselementengruppe 393, das heißt die in dieser befindliche hochsiedende Flüssigkeit mittels dem diesem Innenraum 33 zugeordneten Heizelement 36 thermisch beaufschlagt wird, wodurch sich den Innenraum 33 umgrenzende Hülle 32 ausdehnt und eine Druckkraft auf eine den Fortsatz 387 begrenzende Flanke 395 ausübt. Dadurch wird der Rotationskörper 362 beispielsweise um 2,5 Grad im Uhrzeigersinn gedreht. Dies bewirkt, daß der der zweiten Übertragungselementengruppe 393 zugeordnete Fortsatz 387 ebenfalls um 2,5 Grad bewegt wird, wodurch der erste Innenraum 33 der zweiten Übertragungselementengruppe 393, das heißt eine Mittelachse dieses Innenraumes 33 zu einer Mittelachse des zweiten Fortsatzes 387 einen Winkel von 2,5 Grad aufweist.

Wird nun die im ersten Innenraum 33 der zweiten Übertragungselementengruppe 393 angeordnete Flüssigkeit expandiert, so wird der dieser zugeordnete Fortsatz 387 an seiner Flanke 395 mit einer Druckkraft beaufschlagt, welche den Rotationskörper 362 um 2,5 Grad weiterbewegt, sodaß der dritte Fortsatz 387 zum ersten Innenraum 33 der dritten Bewegungsgruppe einen Winkelversatz von 2,5 Grad besitzt, welcher bei Expansion des ersten Innenraumes 33 der dritten Übertragungselementengruppe 393 auf 5 Grad erhöht wird, sodaß der vierte Fortsatz 387 zum ersten Innenraum 33 der vierten Übertragungselementengruppe 393 bei nicht expandierter Lage einen Winkelversatz ebenfalls von 2,5 Grad aufweist, welcher auf 5 Grad erhöht wird, wenn dieser erste Innenraum 33 der vierten Übertragungselementengruppe 393 expandiert wird. Dadurch wird aber wiederum der erste Fortsatz 387 um 2,5 Grad weiterbewegt, sodaß dieser dann einen Winkelversatz von 2,5 Grad zum zweiten Innenraum 33 der ersten Übertragungselementengruppe 393 besitzt. Dadurch ist es nun möglich, daß der Rotationskörper 362 jeweils um einen Bruchteil des Winkelversatzes 394 drehbewegt wird, wobei ein die Ansatzplanfläche 365 in Richtung zum Grundgehäuseteil 322 überragender, in der Vertiefungsnut 356 angeordneter Zapfen 396 in der Vertiefungsnut 356 weiterbewegt wird, welche einen Anschlag ausbildet, sodaß, wenn der Verteilungskanal 370, insbesondere die Längsnut 371, eine Deckungslage mit dem Abströmkanal 16 bildet, eine weitere Drehbewegung des Rotationskörpers 362 verhindert wird.

Zum Zwecke einer entgegen dem Uhrzeigersinn gerichteten Drehbewegung des Rotationskörpers 362, d.h. zur Wiederherstellung der Strömungsverbindung zwischen Sekundärkanal 18 und Zuströmkanal 15, ist im Innenraum 361 ein weiterer Rotationskörper 363 angeordnet, welcher einen Mitnehmerzapfen 397 besitzt, der in den Rotationskörper 362 hineinragt. Der zweite Rotationskörper 363 weist dabei ebenso, wie beschrieben, Mittel 30 und durch Hüllen 32 gebildete Übertragungselemente 31 auf, welche in umgekehrter Richtung funktionieren. Der Rotationskörper 363 besitzt eine rotationssymmetrisch zur Mittelachse 329 angeordnete Bohrung 398 mit einem Bohrungsdurchmesser 399, der größer ist als der Ansatzdurchmesser 331, wobei zwischen dem Ansatzdurchmesser 331 und dem Bohrungsdurchmesser 399 ein Zwischenraum angeordnet ist, in dem sich beispielsweise ein Gleitlager 400 befindet, welches sowohl am Ansatz 380 als auch am Ansatz 330 gelagert ist. Die Gehäuseteile 321, 322 besitzen weiters Leitungskanäle 401, über die Leitungen 50 von Mehrfachstecker 241 zum Basiskörper 389 geführt sind, in welchem beispielsweise nicht dargestellte Leiterbahnen 134, die zu den einzelnen Heizelementen 36 der einzelnen Heizvorrichtungsgruppen 391 geführt sind, angeordnet sind. Selbstverständlich kann der Winkel 392 bzw. der Winkelversatz 394 bzw. die Anzahl der Innenräume 33 der Übertragungselementengruppe 393, sowie die Anzahl der Fortsätze 387 unterschiedlich gewählt werden.

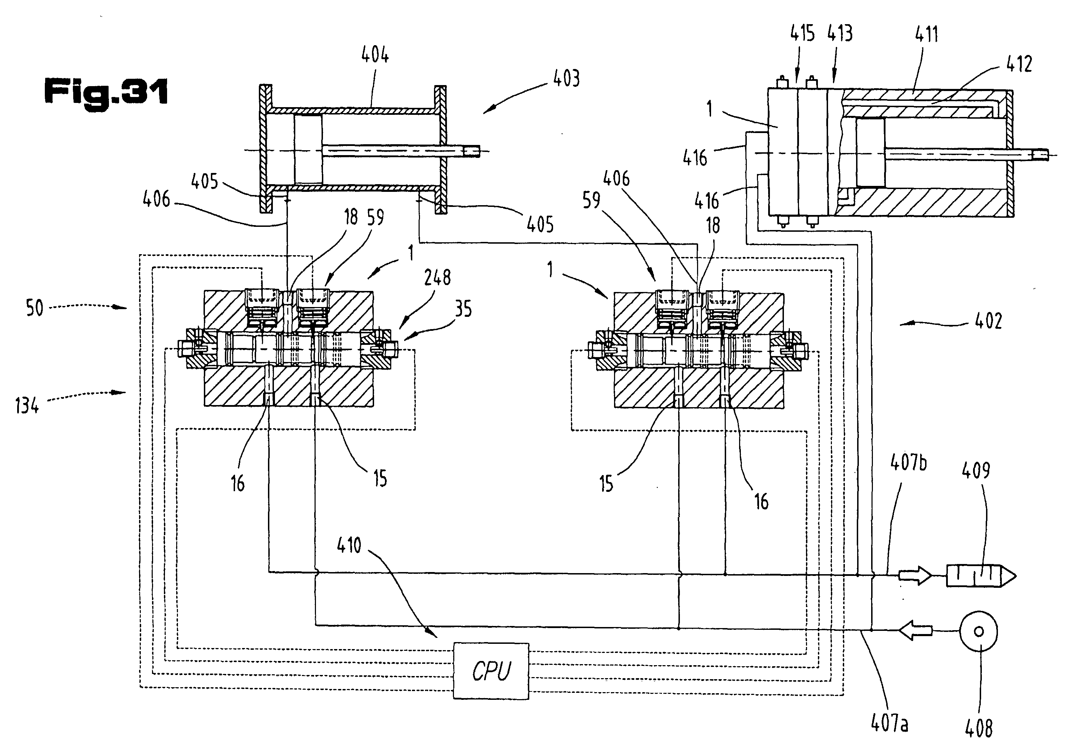

Schließlich ist in der Fig. 31 eine schematische Darstellung einer Steuereinrichtung 402 für einen druckmittelbetätigten Verbraucher 403, insbesondere einen Pneumatikzylinder 404 dargestellt. Der Pneumatikzylinder 404 ist beispielsweise doppelt wirkend ausgebildet und besitzt zwei Druckmittelanschlüsse 405, von welchen Verbindungsleitungen 406, insbesondere Druckluftleitungen zu den Sekundärkanälen 18 der Schaltelemente 1 führen. Die Zuströmkanäle 15 der Schaltelemente 1 sind beispielsweise zu einer gemeinsamen Druckmittelzuströmleitung 407a zusammengefaßt. Diese ist mit einer Druckquelle 408, beispielsweise einem Kompressor, verbunden. Die Abströmkanäle 16 der Schaltelemente 1 sind beispielsweise ebenfalls zu einer gemeinsamen Druckmittelabströmleitung 407b zusammengefaßt, wobei eine Abgabe des Druckmittels an die Umgebung über beispielsweise einen Schalldämpfer 409 erfolgt. Die Halte- oder Arretiervorrichtungen 59 sowie die Vorsteuerventile 248, insbesondere deren Heizvorrichtungen 35 sind über strichliert dargestellte Leitungen 50 bzw. über Leiterbahnen 134 mit einer Kontrolleinheit 410, beispielsweise einem Mikroprozessor, verbunden. Dieser steuert die Schaltelemente 1 entsprechend des Zweckes bzw. der Aufgabenstellung des Verbrauchers 403 an, wobei die Schaltelemente 1 oder die Kontrolleinheit 410 direkt im Druckmittelanschluß 405 integriert werden kann, sodaß Verbindungsleitungen 406 sowie Leitungen 50 bzw. Leiterbahn 134 entfallen können.

Der Pneumatikzylinder 404 kann jedoch auch so ausgebildet sein, daß ein Zylindermantel 411 intern verlaufende Druckmittelkanäle 412 besitzt, welche von einem beispielsweise stirnseitigen Anschlußbereich 413 bis zu einem durch den Zylindermantel 411 umgrenzten Innenbereich verlaufen. Im Anschlußbereich 413 befindet sich dabei beispielsweise eine Schaltelementengruppe 415, welche aus einem oder mehreren beschriebenen Schaltelementen 1 gebildet ist und die zentrale Anschlüsse 416 für die Zuluft bzw. Abluft besitzt. Diese sind wiederum mit der Druckmittelzuströmleitung 407a bzw. der Druckmittelabströmleitung 407b verbunden.

Die einzelnen dargestellten Varianten und Details können als standardisierte bzw. genormte Bauelemente ausgebildet sein, welche bauteilartig zu einem modularen Gesamtelement zusammengefiigt werden können. Dadurch wird beispielsweise die Möglichkeit geschaffen, Ventilblöcke mit Feldbusanschlüssen herzustellen, wie diese von Pneumatikherstellern zum Zeitpunkt der Anmeldung am Markt angeboten werden. Insbesondere können die Schaltmodule und gegebenenfalls die Steuermodule zum Herstellen der Ventilblöcke durch Verwendung von pneumatischen Verteilerleisten und/oder elektrischen Verteilerschienen, wie dies im Detail in der DE 30 42 205 C3 des selben Anmelders beschrieben ist, gebildet werden.

Der Ordnung halber sei abschließend darauf hingewiesen, daß zum besseren Verständnis des Aufbaus des Schaltelementes 1 dieses bzw. dessen Bestandteile teilweise unmaßstäblich und/oder vergrößert und/oder verkleinert dargestellt wurden.

### Bezugszeichenaufstellung

- 1: Schaltelement
- 2: Pneumatikventil
- 3: Oberseite
- 4: Höhe
- 5: Unterseite

- 6: Seitenfläche
- 7: Länge
- 8: Kanal
- 9: Mittelachse
- 10: Führungsvorrichtung

- 11a: Bewegungselement
- 11b: Bewegungselement
- 12: Verteilungskanal
- 13: Bohrungsachse
- 14: Anschlußgewinde

- 15: Zuströmkanal
- 16: Abströmkanal
- 17: Abstand
- 18: Sekundärkanal
- 19: Stirnfläche

- 20: Bund
- 21: Vertiefung
- 22: Dichtelement
- 23: Innendurchmesser
- 24: Abstand

- 25: Kanaldurchmesser
- 26: Zwischenstück
- 27: Durchmesser
- 28: Bunddurchmesser
- 29: Abstand

- 30: Mittel
- 31: Übertragungselement
- 32: Hülle
- 33: Innenraum
- 34: Außenfläche

- 35: Heizvorrichtung
- 36: Heizelemente
- 37: Heizwiderstand
- 38: Distanz
- 39: Aufnahme

- 40: Verschlußstück
- 41: Gewindeabschnitt
- 42: Außendurchmesser
- 43: Kerndurchmesser
- 44: Innengewinde

- 45: Fläche
- 46: Fortsatz
- 47: Fortsatzdurchmesser
- 48: Fortsatzlänge
- 49: Frontfläche

- 50: Leitung
- 51: Innensechskantaufnahme
- 52: Abstand
- 53: Überwachungselement
- 54: Näherungsschalter

- 55: Distanz
- 56: Aufnahmenut
- 57: Abstand
- 58: Haltenut
- 59: Halte- und/oder Arretiervorrichtung

- 60: Innenfläche
- 61: Innenseite
- 62: Fläche
- 63: Abstand
- 64: Rückseite

- 65: Gehäuse
- 66: Mantel
- 67: Stimteile
- 68: Weite
- 69: Breite

- 70: Öffnung
- 71: Wellenenergiequelle
- 72: Wellengenerator
- 73: Mikrowellengenerator
- 74: Achse

- 75: Verbindungsleitung
- 76: Stecker
- 77: Gewindebohrung
- 87: Kanalhöhe
- 88: Oberfläche

- 89: Seitenfläche
- 90: Länge
- 91: Öffnung
- 93: Hauptabsperrorgan
- 94: Breite

- 95: Weite
- 96: Busstecker
- 97: Grundkörper
- 98: Zusatzkörper
- 99: Sammelelement

- 100: Breite
- 101: Querebene
- 102: Längsebene
- 103: Öffnung
- 104: Vertiefung

- 105: Innenfläche
- 106: Nuttiefe
- 107: Innenseitenfläche
- 108: Nutbreite
- 109: Dichtelement

- 110: Höhe
- 111: Außenseite
- 112: Anschlußöffnung
- 113: Anschlußgewinde
- 114: Grundplatte

- 115: Breite
- 116: Längsebene
- 117: Länge
- 118: Querseitenfläche
- 119: Längsseitenfläche

- 120: Unterseite
- 121: Höhe
- 122: Oberseite
- 123: Längsebene
- 124: Querebene

- 125: Abstand
- 126: Abstand
- 127: Stirnelement
- 128: Stirnhöhe
- 129: Stirnfläche

- 130: Kupplungsaufnahme
- 131: Kupplungsvorrichtung
- 132: Steckbuchse
- 133: Leitung
- 134: Leiterbahn

- 135: Platine
- 136: Kupplungsfortsatz
- 137: Kupplungselement
- 138: Steckelement
- 139: Leitung

- 140: Hubkolben
- 141: Dichtabschnitt
- 142: Zylindermantel
- 143: Kegelmantel
- 144: Manteldurchmesser

- 145: Durchmesser
- 146: Konusteil
- 147: Stange
- 148: Abstand
- 149: Bund

- 150: Bunddurchmesser
- 151: Zugstange
- 152: Gewindeabschnitt
- 153: Öffnung
- 154: Federelement

- 155: Tellerelement
- 156: Dichtsitz
- 184: Hydraulikventil
- 185: Nut
- 186: Nutgrund

- 187: Innenfläche
- 188: Bolzen
- 189: Bolzenlänge
- 190: Bolzendurchmesser
- 191: Ausnehmungsdurchmesser

- 192: Ausnehmung
- 193: Endbereich
- 194: Tiefe
- 195: Lagerelement
- 196: Gleitlagerbuchse

- 197: Quersteg
- 198: Umfangssteg
- 199: Höhe
- 200: Breite
- 201: Nutseite

- 202: Schnittkante
- 203: Oberfläche
- 204: Achsabstand
- 205: Einformung
- 206: Symmetrieebene

- 207: Oberflächenlinie
- 208: Einformungstiefe
- 209: Abstand
- 210: Höhe
- 211: Segment

- 212: Endkante
- 213: Abstand
- 214: Abstand
- 215: Seitenversatz
- 216: Endkante

- 217: Anschlag
- 218: Anschlagfläche
- 219: Stirnfläche
- 220: Ausrichtung
- 221: Endkante

- 222: Flanschplatte
- 223: Außenfläche
- 224: Vertiefungsnut
- 225: Nutbreite
- 226: Nuttiefe

- 227: Abstand
- 228: Distanz
- 229: Abstand
- 230: Kontaktelement
- 231: Kontaktsteg

- 232: Nutgrund
- 233: Innenbohrung
- 234: Außenfläche
- 235: Bohrungstiefe
- 236: Flanschdicke

- 237: Bohrungsdurchmesser
- 238: Leitungselement
- 239: Leitung
- 240: Kupplungsvorrichtung
- 241: Mehrfachstecker

- 242: Kontaktelement
- 243: Kupplungsvorrichtung
- 244: Aufnahmeöffnung
- 245: Vorrichtungsachse
- 246: Fortsatz

- 247: Bund
- 248: Vorsteuerventil
- 249: Dämpfungselement
- 250: Abstand
- 251: Arretiemut

- 252: Arretierelement
- 253: Distanz
- 254: Breite
- 255: Mittelachse
- 256: Weite

- 257: Hubweg
- 258: Arretierzapfen
- 259: Bohrung
- 260: Planfläche
- 261: Ausnehmung

- 262: Innengewinde
- 263: Platte
- 264: Stirnfläche
- 265: Verschlußstück
- 266: Stirnfläche

- 267: Stirnfläche
- 268: Federelement
- 269: Oberfläche
- 270: Spitze
- 271: Piezoelement

- 275: Hubkolbenachse
- 276: Hubkolbenaufnahme
- 277: Dichtoberfläche
- 278: Planfläche
- 279: Hubkolbenbohrung

- 280: Höhe
- 281: Durchmesser
- 282: Dichtdurchmesser
- 283: Abstand
- 284: Führungsbohrung

- 285: Bohrungsdurchmesser
- 286: Führungshülse
- 287: Innendurchmesser
- 288: Unterseite
- 289: Ringfläche

- 290: Dicke
- 291: Oberseite
- 292: Ringfläche
- 293: Ringfläche
- 294: Hülsenhöhe

- 295: Tiefe
- 296: Fortsatz
- 297: Innenseite
- 298: Deckplatte
- 299: Einformung

- 300: Außendurchmesser
- 301: Innendurchmesser
- 302: Innenstirnfläche
- 303: Schlitz
- 304: Winkelversatz

- 305: Schlitztiefe
- 306: Federfortsatz
- 307: Fortsatz
- 308: Fortsatzdurchmesser
- 309: Dichtdurchmesser

- 310: Planfläche
- 311: Breite
- 312: Arretierbund
- 313: Bunddurchmesser
- 314: Bundfläche

- 315: Verbindungsstück
- 316: Durchmesser
- 317: Führungskolben
- 318: Zwischenstück
- 319: Außenseite

- 320: Gleitelement
- 321: Gehäuseteil
- 322: Gehäuseteil
- 323: Innenfläche
- 324: Innenfläche

- 325: Außenfläche
- 326: Gehäuseteiltiefe
- 327: Mittelebene
- 328: Mittelebene
- 329: Mittelachse

- 330: Ansatz
- 331: Ansatzdurchmesser
- 332: Ansatzfläche
- 333: Einformung
- 334: Stirnfläche

- 335 336: Planfläche
- 337: Einformungstiefe
- 338: Innenfläche
- 339: Einformungsdurchmesser

- 340: Gehäuseteilhöhe
- 341: Gehäuseteilbreite
- 342: Gehäuseteiltiefe
- 343: Außenfläche
- 344: Einformung

- 345: Stirnfläche (erste)
- 346: Stirnflächentiefe
- 347: Innenfläche
- 348: (ersten) Einformungsdurchmesser
- 349: (zweite) Stirnfläche

- 350: Stirnflächentiefe
- 351: Innenfläche
- 352: (zweiten) Einformungsdurchmesser
- 353: Lochkreis
- 354: Lochkreisradius

- 355: Winkel
- 356: Vertiefungsnut
- 357: Nuttiefe
- 358: Radius
- 359: Mittellinie

- 360: Mittelpunkt
- 361: Innenraum
- 362: Rotationskörper
- 363: Rotationskörper
- 364: Ansatz

- 365: Ansatzplanfläche
- 366: Ansatzdurchmesser
- 367: Ansatzmantelfläche
- 368: Ansatzlänge
- 369: Planfläche

- 370: Verteilungskanal
- 371: Längsnut
- 372: Bohrung
- 373: Länge
- 374: Mittelachse

- 375: Mittelachse
- 376: Bohrungsachse
- 377: Planfläche
- 378: Breite
- 379: Vertiefung

- 380: Ansatz
- 381: Ansatzplanfläche
- 382: Ansatzlänge
- 383: Ansatzmantelfläche
- 384: Ansatzdurchmesser

- 385: Stirnfläche
- 386: Stirnflächendurchmesser
- 387: Fortsatz
- 388: Zwischenraum
- 389: Basiskörper

- 390: Heizfläche
- 391: Heizvorrichtungsgruppe
- 392: Winkel
- 393: Übertragungselementengruppe
- 394: Winkelversatz

- 395: Flanke
- 396: Zapfen
- 397: Mitnehmerzapfen
- 398: Bohrung
- 399: Bohrungsdurchmesser

- 400: Gleitlager
- 401: Leitungskanal
- 402: Steuerungsrichtung
- 403: Verbraucher
- 404: Pneumatikzylinder

- 405: Druckmittelanschluß
- 406: Verbindungsleitung
- 407a: Druckmittelzuströmleitung
- 407b: Druckmittelabströmleitung
- 408: Druckquelle

- 409: Schalldämpfer
- 410: Kontrolleinheit
- 411: Zylindermantel
- 412: Druckmittelkanal
- 413: Anschlußbereich

- 415: Schaltelementengruppe
- 416: Anschluß

## Patentansprüche

1. Schaltelement (1) für Druckmittel, beispielsweise ein Pneumatikventil (2) oder ein Hydraulikventil (172), mit einem Ventilkörper mit einem Verteilungskanal (12) und in den Verteilungskanal (12) mündenden weiteren Kanälen, beispielsweise Zu- und/oder Abströmkanäle (15, 16) oder Sekundärkanäle (18), für das Druckmittel und mit zumindest einem in einem der Kanäle (12, 15, 16, 18) angeordneten verstellbaren Bewegungselement (11a; 11b) zum Trennen und Verbinden von weiteren Kanälen (15, 16, 18) und dem Verteilungskanal (12) und mit mindestens einem Übertragungselement (31), das wenigstens einen Innenraum (33) aufweist, welcher zur Relativbewegung des Bewegungselementes (11a; 11b) gegenüber dem Ventilkörper mit einer bei Erwärmung expandierenden Flüssigkeit gefüllt ist, **dadurch gekennzeichnet, daß** das mindestens eine Übertragungselement (31) durch eine den wenigstens einen Innenraum (33), innerhalb dem die bei Erwärmung expandierende Flüssigkeit angeordnet ist, vollständig umgrenzende, elastisch verformbare Hülle (32) gebildet ist und gegebenenfalls das Bewegungselement (11b) bildet und daß das mindestens eine Übertragungselement (31) im Verteilungskanal (12) benachbart zu einem der in den Verteilungskanal (12) mündenden weiteren Kanälen (15; 16; 18) oder in einem der weiteren Kanäle (15; 16; 18) angeordnet ist.

2. Schaltelement nach Anspruch 1, **dadurch gekennzeichnet, daß** das mindestens eine Übertragungselement (31) im Verteilungskanal (12) angeordnet und einer entsprechenden Öffnung (91) des weiteren Kanals (15, 16, 18) zugeordnet ist.

3. Schaltelement nach Anspruch 1 oder 2, **dadurch gekennzeichnet, daß** zumindest ein Mittel (30) dem zumindest einen Übertragungselement (31) zur Betätigung desselben zugeordnet ist, insbesondere eine Wellenenergiequelle (71), ein Wellengenerator (72) oder eine elektrische Heizvorrichtung (35), beispielsweise ein Heizelement (36).

4. Schaltelement nach Anspruch 3, **dadurch gekennzeichnet, daß** das Mittel (30) durch die Heizvorrichtung (35) gebildet ist und ein in den weiteren Kanal (15, 16, 18) vorragendes Heizelement (36) aufweist und daß das Bewegungselement (11b) bildende Übertragungselement (31) konzentrisch um das Heizelement (36) angeordnet ist.

5. Schaltelement nach Anspruch 3, **dadurch gekennzeichnet, daß** das Mittel (30) im Innenraum (33) und/oder an einer Außenfläche (34) des Übertragungselementes (31) angeordnet ist.

6. Schaltelement nach Anspruch 1, **dadurch gekennzeichnet, daß** im Verteilungskanal (12) zwischen einander gegenüberliegenden Übertragungselementen (31) zumindest ein kolbenförmiges Bewegungselement (11a) verstellbar angeordnet ist.

7. Schaltelement nach Anspruch 6, **dadurch gekennzeichnet, daß** das kolbenförmige Bewegungselement (11a) aus Metall und/oder Kunststoff gebildet ist und daß das Bewegungselement (11a) zumindest ein Dichtelement (22), beispielsweise einen Dichtring, aufweist.

8. Schaltelement nach einem der Ansprüche 1 bis 7, **dadurch gekennzeichnet, daß** einander benachbarte Bewegungselement (11a) zueinander relativbeweglich ausgebildet sind.

9. Schaltelement nach Anspruch 1 oder 2, **dadurch gekennzeichnet, daß** das Übertragungselement (31) mehr Innenräume (33) als der Ventilkörper weitere Kanäle (15, 16, 18) aufweist.

10. Schaltelement nach Anspruch 1, **dadurch gekennzeichnet, daß** im Verteilungskanal (12) eine Führungsvorrichtung (10) für das Bewegungselement (11a) durch einen Bolzen (188) gebildet ist, welcher eine Bohrung des Bewegungselementes (11a) durchragt.

11. Schaltelement nach Anspruch 10, **dadurch gekennzeichnet, daß** der Bolzen (188) konzentrisch um die Mittelachse (9) umlaufende, in Richtung der Mittelachse (9) um einen Abstand (229) distanzierte Vertiefungsnuten (224) aufweist, in denen Kontaktelemente (230) angeordnet sind.

12. Schaltelement nach Anspruch 11, **dadurch gekennzeichnet, daß** die Kontaktelemente (230) Kontaktstege (231) besitzen, die in eine Innenbohrung (233) des Bolzens (188) ragen und die über Leitungselemente (238) mit einem, in einer Flansch platte (222) eines Verschlußstückes (40) angeordneten Mehrfachstecker (241) leitungsverbunden sind.

13. Schaltelement nach Anspruch 12, **dadurch gekennzeichnet, daß** an einer Innenfläche (187) der Flanschplatte (222) Kontaktelemente (242) zur Kontaktierung des Mittels (30) angeordnet sind.

14. Schaltelement nach Anspruch 1, **dadurch gekennzeichnet, daß** das Übertragungselement (31) mit einem im Verteilungskanal (12) angeordneten Verschlußstück (40) verbunden ist.

15. Schaltelement nach einem der Ansprüche 1 bis 14, **dadurch gekennzeichnet, daß** der Verteilungskanal (12) eine Nut (185) aufweist, in der das Übertragungselement (31) und/oder das Mittel (30) angeordnet ist.

16. Schaltelement nach Anspruch 15, **dadurch gekennzeichnet, daß** das Bewegungselement (11a) in einem der Nut (185) zugewandten Bereich konkave Einformungen (205) aufweist.

17. Schaltelement nach Anspruch 1, **dadurch gekennzeichnet, daß** in einem der Kanäle (12, 15, 16, 18), insbesondere im Verteilungskanal (12), zumindest ein Teilbereich einer Halte- und/oder Arretiervorrichtung (59) für das Bewegungselement (11a) angeordnet ist.

18. Schaltelement nach Anspruch 17, **dadurch gekennzeichnet, daß** die Halte- und/oder Arretiervorrichtung (59) die konzentrisch um die Mittelachse (9) verlaufende Heizvorrichtung (35) aufweist, welche aus mehreren in Umfangsrichtung einer Innenfläche (60) des Verteilungskanals (12) nacheinander angeordnete Heizelemente (36) besteht, denen jeweils der mit einer hochsiedenden Flüssigkeit gefüllte Innenraum (33) der Hülle (32) zugeordnet ist.

19. Schaltelement nach Anspruch 17 oder 18, **dadurch gekennzeichnet, daß** das als Kolben ausgebildete Bewegungselement (11a) Arretiernuten (251) aufweist, denen Arretierelemente (252) von Halte- und/oder Arretiervorrichtungen (59) zugeordnet sind.

20. Schaltelement nach Anspruch 19, **dadurch gekennzeichnet, daß** das Arretierelement (252) einen Arretierzapfen (258) aufweist, der von der Hülle (32) des Übertragungselementes (31) umfaßt wird und eine Platte (263) besitzt, welche das Übertragungselement (31) von einem Federelement (268) distanziert.

21. Schaltelement nach Anspruch 20, **dadurch gekennzeichnet, daß** die Platte (263) ein Piezoelement (271) vom Federelement (268) distanziert.

22. Schaltelement nach Anspruch 1, **dadurch gekennzeichnet, daß** das Schaltelement (1) einen Grundkörper (97) aufweist, in dem mehrere Kanäle (15, 16, 18) rasterförmig angeordnet sind, welche im Bereich der Oberseite (3) Öffnungen (103) ausbilden, die von zumindest einem Sammelelement (99) überdeckt werden, welches zumindest eine Anschlußöffnung (112) aufweist.

23. Schaltelement nach Anspruch 22, **dadurch gekennzeichnet, daß** die Anschlußöffnung (112) bis zu einer nutförmigen Vertiefung (104) des Sammelelementes (99) reicht, welche die Öffnungen (103) überdeckt.

24. Schaltelement nach einem der Ansprüche 1 bis 23, **dadurch gekennzeichnet, daß** das Mittel (30), insbesondere die Heizvorrichtung (35), eine Grundplatte (114) aufweist, an deren Oberseite (122) Heizelemente (36) insbesondere rasterförmig angeordnet sind.

25. Schaltelement nach Anspruch 24, **dadurch gekennzeichnet, daß** die Grundplatte (114) ein Stirnelement (127) besitzt, welches zumindest eine Kupplungsaufnahme (130) einer Kupplungsvorrichtung (131) aufweist.

26. Schaltelement nach Anspruch 24 oder 25, **dadurch gekennzeichnet, daß** von der Kupplungsaufnahme (130) Leitungen (133) zu den Heizelementen (36) führen, welche zumindest im Bereich der Oberseite (122) vorzugsweise als Leiterbahnen (134) ausgebildet sind.

27. Schaltelement nach Anspruch 1, **dadurch gekennzeichnet, daß** das Bewegungselement (11a) als Hubkolben (140) ausgebildet ist, welcher im weiteren Kanal (15, 16, 18) angeordnet ist und einen durch einen Kegelmantel (143) gebildeten Dichtabschnitt (141) besitzt, dem ein im weiteren Kanal (15, 16, 18) angeordneter konischer Dichtsitz (156) zugeordnet ist.

28. Schaltelement nach Anspruch 27, **dadurch gekennzeichnet, daß** der Hubkolben (140) eine Zugstange (151) besitzt, welche von einem, durch die Hülle (32) mit hochsiedender Flüssigkeit gebildeten Übertragungselement (31) umgrenzt ist und die Zugstange ein Federelement (154) durchragt, welches eine Federkraft auf ein, mit der Zugstange (151) verbundenes Tellerelement (155) ausübt.

29. Schaltelement nach Anspruch 27 oder 28, **dadurch gekennzeichnet, daß** das Bewegungselement (11a) als Hubkolben (140) ausgebildet ist, welcher einen Arretierbund (312) besitzt, dem ein Arretierelement (252) zugeordnet ist, welches sternförmig um eine Hubkolbenachse (275) des Hubkolbens (140) angeordnete Schlitze (303) besitzt, die sternförmig angeordnete Federfortsätze (306) voneinander distanzieren.

30. Schaltelement nach einem der Ansprüche 1 bis 29, **dadurch gekennzeichnet, daß** das durch die Hülle (32) gebildete und das Bewegungselement (11a) ausbildende Übertragungselement (31) bei Erwärmung der von dieser umgrenzten hochsiedenden Flüssigkeit eine entgegen der Federkraft des Federelementes (154) gerichtete Druckkraft auf einen mit dem Hubkolben (140) verbundenen Bund (149) ausübt.

## Claims

1. Control element (1) for pressurised media, for example a pneumatic valve (2) or a hydraulic valve (184), with a valve body having a distribution passage (12) and other passages opening into the distribution passage (12), for example inlet and/our outlet passages (15, 16) or secondary passages (18) for the pressurised medium, and having at least one displaceable moving element (11a; 11b) disposed in one of the passages (12, 15, 16, 18) for cutting off and connecting other passages (15, 16, 18) and the distribution passage (12), and having at least one transmission element (31) with an interior space (33) which is filled with a fluid which expands when heated in order to displace the moving element (11a; 11b) relative to the valve body, **characterised in that** the at least one transmission element (31) is an elastically deformable sleeve (32) completely surrounding the at least one interior space (33) in which the fluid which expands on heating is contained and optionally constitutes the moving element (11b), and the at least one transmission element (31) is disposed in the distribution passage (12), adjacent to one of the other passages (15, 16, 18) opening into the distribution passage (12), or in one of the other passages (15, 16, 18).

2. Control element as claimed in claim 1, **characterised in that** the at least one transmission element (31) is disposed in the distribution passage (12) and co-operates with a matching orifice (91) of the other passage (15, 16, 18).

3. Control element as claimed in claim 1 or 2, **characterised in that** at least one means (30) is assigned to the at least one transmission element (31) for the operation thereof, in particular a wave energy source (71), a wave generator (72) or an electric heating device (35), for example a heating element (36).

4. Control element as claimed in claim 3, **characterised in that** the means (30) is a heating device (35) and has a heating element (36) projecting into the other passage (15, 16, 18), and the transmission element (31) constituting the moving element (11b) is disposed concentrically about the heating element (36).

5. Control element as claimed in claim 3, **characterised in that** the means (30) is disposed in the interior space (33) and/or on an external face (34) of the transmission element (31).

6. Control element as claimed in claim 1, **characterised in that** at least one piston-shaped moving element (11a) is displaceably disposed in the distribution passage (12) between oppositely lying transmission elements (31).

7. Control element as claimed in claim 6, **characterised in that** the piston-shaped moving element (11a) is made from metal and/or plastic and the moving element (11a) has at least one seal element (22), for example a sealing ring.

8. Control element as claimed in one of claims 1 to 7, **characterised in that** mutually adjacent moving elements (11a) are displaceable relative to one another.

9. Control element as claimed in claim 1 or 2, **characterised in that** the transmission element (31) has more interior spaces (33) than the valve body has other passages (15, 16, 18).

10. Control element as claimed in claim 1, **characterised in that** a guide mechanism (10) is provided in the distribution passage (12) for the moving element (11a) in the form of a bolt (188), which extends through a bore of the moving element (11a).

11. Control element as claimed in claim 10, **characterised in that** the bolt (188) has recessed grooves (224) extending concentrically about the mid-axis (9), spaced at a distance (229) apart in the direction of the mid-axis (9), in which contact elements (230) are disposed.

12. Control element as claimed in claim 11, **characterised in that** the contact elements (230) have contact bridges (231), which project into an inner bore (233) of the bolt (188) and which are conductively connected via line elements (238) to a multi-way plug (241) disposed in a flanged plate (222) of a closure element (40).

13. Control element as claimed in claim 12, **characterised in that** contact elements (242) are provided on an internal face (187) of the flanged plate (222) in order to establish contact with the means (30).

14. Control element as claimed in claim 1, **characterised in that** the transmission element (31) is connected to a closure element (40) disposed in the distribution passage (12).

15. Control element as claimed in one of claims 1 to 14, **characterised in that** the distribution passage (12) has a groove (185), in which the transmission element (31) and/or the means (30) is disposed.

16. Control element as claimed in claim 15, **characterised in that** the moving element (11a) has concave indentations (205) in a region facing the groove (185).

17. Control element as claimed in claim 1, **characterised in that** at least a part-region of a retaining and/or locking device (59) for the moving element (11a) is disposed in one of the passages (12, 15, 16, 18), in particular in the distribution passage (12).

18. Control element as claimed in claim 17, **characterised in that** the retaining and/or locking device (59) has a heating device (35) extending concentrically about the mid-axis (9), which consists of a plurality of successive heating elements (36) disposed in the circumferential direction of an internal face (60) of the distribution passage(12), each of which co-operates with an interior space (33) of the sleeve (32) filled with a liquid with a high boiling point.

19. Control element as claimed in claim 17 or 18, **characterised in that** the moving element (11a), provided in the form of a piston, has lock grooves (251) with which locking elements (252) of retaining and/or locking devices (59) co-operate.

20. Control element as claimed in claim 19, **characterised in that** the locking element (252) has a lock pin (258) which is enclosed by the sleeve (32) of the transmission element (31) and a plate (263) which spaces the transmission element (31) apart from a spring element (268).

21. Control element as claimed in claim 20, **characterised in that** the plate (263) spaces a piezo-element (271) apart from the spring element (268).

22. Control element as claimed in claim 1, **characterised in that** the control element (1) has a base body (97) incorporating a plurality of passages (15, 16, 18) disposed in a grid pattern, which form orifices (103) in the region of the top face (3) and overlap with at least one header element (99) having at least one connecting orifice (112).

23. Control element as claimed in claim 22, **characterised in that** the connecting orifice (112) extends as far as a groove-shaped recess (104) of the header element (99), which overlaps with the orifices (103).

24. Control element as claimed in one of claims 1 to 23, **characterised in that** the means (30), in particular the heating device (35), has a base plate (114), on the top face (122) of which heating elements (36) are disposed, in particular in a grid pattern.

25. Control element as claimed in claim 24, **characterised in that** the base plate (114) has an end element (127), incorporating at least one coupling terminal (130) of a coupling device (131).

26. Control element as claimed in claim 24 or 25, **characterised in that** lines (133) run from the coupling terminal (130) to the heating elements (36), which are preferably disposed at least in the region of the top face (122), preferably as conductor tracks (134).

27. Control element as claimed in claim 1, **characterised in that** the moving element (11a) is provided in the form of a reciprocating piston (140) disposed in the other passage (15, 16, 18) and has a sealing portion (141) formed by a conical jacket (143) which co-operates with a conical seal seat (156) disposed in the other passage (15, 16, 18).

28. Control element as claimed in claim 27, **characterised in that** the reciprocating piston (140) has a pull rod (151) bounded by a transmission element (31) formed by the sleeve (32) containing liquid with a high boiling point, and the pull rod extends through a spring element (154) which exerts a spring force on a plate element (155) connected to the pull rod (151).

29. Control element as claimed in claim 27 or 28, **characterised in that** the moving element (11a) is a reciprocating piston (140) with a lock collar (312), co-operating with which is a lock element (252) with slots (303) disposed in a star-shaped pattern about a reciprocating piston axis (275) of the reciprocating piston (140), which space star-shaped spring projections (306) apart from one another.

30. Control element as claimed in one of claims 1 to 29, **characterised in that** the transmission element (31) formed by the sleeve (32) and constituting the moving element (11a) acts on a collar (149) connected to the reciprocating piston (140) by opposing the spring force of the spring element (154) with a pressure force when the liquid with a high boiling point enclosed in it is heated.

## Revendications

1. Elément de commutation (1) pour un moyen de pression, par exemple une vanne pneumatique (2) ou une vanne hydraulique (184), avec un corps de vanne avec un canal de distribution (12) et d'autres canaux débouchant dans le canal de distribution (12), par exemple des canaux d'afflux et/ou d'écoulement (15, 16) ou des canaux secondaires (18), pour le moyen de pression, et avec au moins un élément de déplacement (11a; 11b) déplaçable dans l'un des canaux (12, 15, 16, 18) pour séparer et relier d'autres canaux (15, 16, 18) et le canal de distribution (12) et avec au moins un élément de transmission (31) qui présente au moins un espace intérieur (33) qui, pour le déplacement relatif de l'élément de déplacement (11a; 11b) par rapport au corps de vanne, est rempli d'un liquide s'expansant lors de l'échauffement, **caractérisé en ce qu'**au moins un élément de transmission (31) est formé par une gaine déformable élastiquement (32) entourant complètement au moins un espace intérieur (33), à l'intérieur duquel se trouve le liquide s'expansant lors de l'échauffement et forme le cas échéant l'élément de déplacement (11b), et **en ce qu'**au moins un élément de transmission (31) est disposé dans le canal de distribution (12) au voisinage d'un des autres canaux (15, 16, 18) débouchant dans le canal de distribution (12) ou dans l'un des autres canaux (15, 16, 18).

2. Elément de commutation selon la revendication 1, **caractérisé en ce qu'**au moins un élément de transmission (31) est disposé dans le canal de distribution (12) et est associé à une ouverture correspondante (91) de l'autre canal (15, 16, 18).

3. Elément de commutation selon la revendication 1 ou 2, **caractérisé en ce qu'**au moins un moyen (30) est associé à au moins un élément de transmission (31) pour l'actionnement de celui-ci, en particulier une source d'énergie d'ondes (71), un générateur d'ondes (72) ou un dispositif de chauffage électrique (35), par exemple un élément chauffant (36).

4. Elément de commutation selon la revendication 3, **caractérisé en ce que** le moyen (30) est formé par le dispositif de chauffage (35) et présente un élément chauffant (36) faisant saillie dans l'autre canal (15, 16, 18), et **en ce que** l'élément de transmission (31) formant l'élément de déplacement (11b) est disposé concentriquement autour de l'élément chauffant (36).

5. Elément de commutation selon la revendication 3, **caractérisé en ce que** le milieu (30) est disposé dans l'espace intérieur (33) et/ou à une face extérieure (34) de l'élément de transmission (31).

6. Elément de commutation selon la revendication 1, **caractérisé en ce qu'**au moins un élément de déplacement (11a) en forme de piston est disposé de manière déplaçable dans le canal de distribution (12) entre des éléments de transmission (31) qui se font face.

7. Elément de commutation selon la revendication 6, **caractérisé en ce que** l'élément de déplacement en forme de piston (11a) est réalisé en métal et/ou en matériau synthétique, et **en ce que** l'élément de déplacement (11a) présente au moins un élément d'étanchéité (22), par exemple une bague d'étanchéité.

8. Elément de commutation selon l'une des revendications 1 à 7, **caractérisé en ce que** des éléments de déplacement avoisinants (11a) sont réalisés pour être déplaçables les uns relativement aux autres.

9. Elément de commutation selon la revendication 1 ou 2, **caractérisé en ce que** l'élément de transmission (31) présente plus d'espaces intérieurs (33) que le corps de soupape d'autres canaux (15, 16, 18).

10. Elément de commutation selon la revendication 1, **caractérisé en ce que** dans le canal de distribution (12), un dispositif de guidage (10) pour l'élément de déplacement (11a) est formé par un boulon (188) qui fait saillie à travers un perçage de l'élément de déplacement (11a).

11. Elément de commutation selon la revendication 10, **caractérisé en ce que** le boulon (188) présente des rainures creusées (224) s'étendant concentriquement autour de l'axe médian (9), espacées dans la direction de l'axe médian (9) selon un écart (229), dans lesquelles sont disposés des éléments de contact (230).

12. Elément de commutation selon la revendication 11, **caractérisé en ce que** les éléments de contact (230) possèdent des baguettes de contact (231) qui font saillie dans un taraudage (233) du boulon (188) et qui sont connectées par des éléments de connexion (238) à une prise multiple (241) disposée dans une plaque à bride (222) d'une pièce de fermeture (40).

13. Elément de commutation selon la revendication 12, **caractérisé en ce que** des éléments de contact (242) sont disposés à une face intérieure (187) de la plaque à bride (222) pour la mise en contact du moyen (30).

14. Elément de commutation selon la revendication 1, **caractérisé en ce que** l'élément de transmission (31) est relié à une pièce de fermeture (40) disposée dans le canal de distribution (12).

15. Elément de commutation selon l'une des revendications 1 à 14, **caractérisé en ce que** le canal de distribution (12) présente une rainure (185) dans laquelle est disposé l'élément de transmission (31) et/ou le moyen (30).

16. Elément de commutation selon la revendication 15, **caractérisé en ce que** l'élément de déplacement (11a) présente dans une zone orientée vers la rainure (185) des formations concaves (205).

17. Elément de commutation selon la revendication 1, **caractérisé en ce qu'**il est disposé dans l'un des canaux (12, 15, 16, 18), en particulier dans le canal de distribution (12), au moins une zone partielle d'un dispositif de retenue et/ou d'arrêt (59) de l'élément de déplacement (11a).

18. Elément de commutation selon la revendication 17, **caractérisé en ce que** le dispositif de retenue et/ou d'arrêt (59) présente le dispositif de chauffage (35) s'étendant concentriquement autour de l'axe médian (9), qui est constitué de plusieurs éléments chauffants (36) disposés les uns derrière les autres dans la direction périphérique d'une face intérieure (60) du canal de distribution (12), auxquels est associé à chaque fois l'espace intérieur (33) de la gaine (32) rempli d'un liquide à point d'ébullition élevé.

19. Elément de commutation selon la revendication 17 ou 18, **caractérisé en ce que** l'élément de déplacement (11a) réalisé comme piston présente des rainures d'arrêt (251) auxquelles sont associés des éléments d'arrêt (252) de dispositifs de retenue et/ou d'arrêt (59).

20. Elément de commutation selon la revendication 19, **caractérisé en ce que** l'élément d'arrêt (252) présente un pivot d'arrêt (258) qui est entouré par la gaine (32) de l'élément de transmission (31) et possède une plaque (263) qui met à distance l'élément de transmission (31) d'un élément de ressort (268).

21. Elément de commutation selon la revendication 20, **caractérisé en ce que** la plaque (263) met à distance un élément piézoélectrique (271) de l'élément de ressort (268).

22. Elément de commutation selon la revendication 1, **caractérisé en ce que** l'élément de commutation (1) présente un corps de base (97) dans lequel sont disposés plusieurs canaux (15, 16, 18) en forme de trame, qui forment au voisinage du côté supérieur (3) des ouvertures (103) qui sont recouvertes par au moins un élément collecteur (99) qui présente au moins une ouverture de raccordement (112).

23. Elément de commutation selon la revendication 22, **caractérisé en ce que** l'ouverture de raccordement (112) s'étend jusqu'à un creux en forme de rainure (104) de l'élément collecteur (99) qui recouvre les ouvertures (103).

24. Elément de commutation selon l'une des revendications 1 à 23, **caractérisé en ce que** le moyen (30), en particulier le dispositif de chauffage (35), présente une plaque de base (114) au côté supérieur (122) de laquelle sont disposés des éléments chauffants (36), en particulier en forme de trame.

25. Elément de commutation selon la revendication 24, **caractérisé en ce que** la plaque de base (114) possède un élément frontal (127) qui présente au moins un logement de couplage (130) d'un dispositif de couplage (131).

26. Elément de commutation selon la revendication 24 ou 25, **caractérisé en ce que** depuis le logement de couplage (130), des lignes (133) mènent aux éléments chauffants (36) qui sont réalisés au moins au voisinage du côté supérieur (122) de préférence comme pistes conductives (134).

27. Elément de commutation selon la revendication 1, **caractérisé en ce que** l'élément de déplacement (11a) est réalisé comme piston élévateur (140), qui est disposé dans l'autre canal (15, 16, 18) et possède une section d'étanchéité (141) formée par une enveloppe conique (143) à laquelle est associé un siège d'étanchéité conique (156) disposé dans l'autre canal (15, 16, 18).

28. Elément de commutation selon la revendication 27, **caractérisé en ce que** le piston élévateur (140) possède un tirant (151) qui est entouré par un élément de transmission (31) formé par la gaine (32) avec le liquide à point d'ébullition élevé, et le tirant fait saillie à travers un élément de ressort (154) qui exerce une force de ressort sur un élément de disque (155) relié au tirant (151).

29. Elément de commutation selon la revendication 27 ou 28, **caractérisé en ce que** l'élément de déplacement (11a) est réalisé comme piston élévateur (140) qui possède un collet d'arrêt (312) auquel est associé un élément d'arrêt (252) qui possède des fentes (303) disposées en forme d'étoile autour d'un axe (275) du piston élévateur (140), qui espacent des prolongements de ressort (306) disposés en forme d'étoile les uns des autres.

30. Elément de commutation selon l'une des revendications 1 à 29, **caractérisé en ce que** l'élément de transmission (31) formé par la gaine (32) et formant l'élément de déplacement (11a), lors de l'échauffement du liquide à point d'ébullition élevé délimité par celle-ci, exerce une force de pression orientée contre la force de l'élément de ressort (154) sur un collet (149) relié au piston élévateur (140).
